# EUROPÄISCHE PATENTSCHRIFT

(11) **EP 4 129 576 B1**
(45) Veröffentlichungstag und Bekanntmachung des Hinweises auf die Patenterteilung: **17.04.2024**
(21) Anmeldenummer: 22195297.1
(22) Anmeldetag: 16.05.2019
(51) Int. Cl.: B25B 27/10, B25B 27/14, B25F 5/00, H01R 43/042, F16J 15/16, H02G 1/00, G01R 19/155, H02J 13/00, F16J 15/06

(54) **ARBEITSGERÄT MIT EINEM HYDRAULIKZYLINDER, WIE EINE ZANGE ODER PRESSE**
TOOL WITH A HYDRAULIC CYLINDER SUCH AS A PLIERS OR A PRESS
APPAREIL DE TRAVAIL DOTÉ D'UN VÉRIN HYDRAULIQUE TEL QU'UNE PINCE OU UNE PRESSE

(30) Priorität: 18.05.2018 DE 102018112097; 20.06.2018 DE 102018114844; 01.08.2018 DE 102018118678; 19.02.2019 DE 102019104150
(43) Veröffentlichungstag der Anmeldung: 08.02.2023
(62) Teilanmeldung aus: 19727877.3
(73) Patentinhaber: Gustav Klauke GmbH, 42855 Remscheid (DE)
(72) Erfinder: Frenken, Egbert, 52525 Heinsberg (DE)
(74) Vertreter: Müller, Enno

(56) Entgegenhaltungen:
- EP-A1- 2 461 037
- WO-A1-03/064091
- WO-A1-2018/065513
- WO-A2-2016/112153
- DE-A1- 10 326 066
- DE-U1- 20 218 307
- US-A1- 2015 283 693

## Beschreibung

### Gebiet der Technik

Die Erfindung betrifft ein hydraulisch betätigtes Arbeitsgerät, gemäß dem Oberbegriff des Patentanspruchs 1, mit einem Hydraulikzylinder, einem in dem Hydraulikzylinder verfahrbaren Hydraulickolben, einem Antriebsgeräteteil, das einen Motor und eine Pumpe aufweist, und einer zu dem Hydraulikzylinder führenden Hydraulikleitung, wobei das Arbeitsgerät ein Arbeitsgeräteteil aufweist, das einen Griffbereich ausformt, wobei sich an das Arbeitsgeräteteil ein Arbeitskopf anschließt.

### Stand der Technik

Arbeitsgeräte der in Rede stehenden Art sind beispielsweise als akkumulatorbetriebene Hand-Arbeitsgeräte bekannt, bei welchen zufolge eines Impulses, beispielsweise zufolge Betätigung einer Auslösetaste, an dem Arbeitsgerät, insbesondere an einem Antriebsgeräteteil, ein Arbeitsprozess ausgelöst wird.

Dokument WO 2018/065513 A1 offenbart ein hydraulisch betätigtes Arbeitsgerät gemäß dem Oberbegriff des Patentanspruchs 1.

Derartige Geräte sind beispielsweise, nicht ausschließlich, akkumulatorbetriebene Verpress-, Stanz-, Crimp- oder Schneidgeräte, wie diese weiter beispielsweise aus der WO 2003/084719 A2 (US 7,254,982 B2) oder der EP 1 084 798 A2 (US 6,718,870 B1) oder der EP 1 155 077 B1 oder der WO 2008/138987 A2 (US 8,056,473 B2) oder der WO 2014/108361 A1 (US 2015/0364889 A1) bekannt sind. Die in den genannten Druckschriften beschriebenen Geräteteile gehören auch zur Offenbarung vorliegender Anmeldung, soweit sie nicht vorliegend wie nachstehend im Weiteren erläutert gesondert abgewandelt sind.

In diesem Zusammenhang und auch darüber hinaus sind zudem Anordnungen zur Abdichtung eines Zwischenraumes zwischen zwei Teilen bekannt geworden, die insbesondere ein Eindringen eines Mediums, wie beispielsweise Wasser, von außen nach innen verhindern.

Aus der US 2015/283693 A1 ist ein Arbeitsgerät mit einem Hydraulikzylinder und darin verfahrbarem Hydraulikkolben bekannt, das zur Erreichung weiter entfernt liegender Arbeitsstellen mit einem Verlängerungsteil ausgebildet ist. Hierzu ist ein erster und ein zweiter Hydraulikzylinder vorgesehen, wobei die Hydraulikmittelleitung zwischen dem ersten und dem zweiten Hydraulikzylinder als Hydraulikschlauch aus nicht leitfähigem Material bestehend ausgebildet sein kann.

Aus der EP 2461037 ist ein Arbeitsgerät bekannt mit einem Hydraulickolben, wobei an den Hydraulikkolben ein Sicherheitsverbindungsschlauch angeschlossen sein kann, der das Hydraulikmittel an einen Kabelschneidkopf oder einen Presskopf weiterleitet.

Hinsichtlich der Anordnung zur Abdichtung eines Zwischenraums zwischen zwei Teilen gegen ein Eindringen eines Mediums von außen nach innen ist aus der US 2012/299249 A1 eine Anordnung bekannt, bei welcher an nicht vorhersehbarer Stelle über den Umfang gesehen, bei entsprechendem höheren Druck von innen, Hydraulikmittel aus der Dichtung nach außen austreten kann.

Aus der WO 03/064091 A1 ist ein hydraulisch betätigtes Arbeitsgerät bekannt mit einem Arbeitsgeräteteil, das einen Griffbereich ausformt und wobei sich an das Arbeitsgeräteteil ein Arbeitskopf anschließt. Der Griffbereich ist bei dem pistolenförmig gestalteten Arbeitsgerät entfernt von dem Arbeitskopf angeordnet. Der Arbeitskopf, der aus einem elektrisch leitfähigen Material besteht, weist radiale Vergrößerungen auf.

### Zusammenfassung der Erfindung

Ausgehend von dem zuletzt genannten Stand der Technik stellt sich der Erfindung die Aufgabe, ein Arbeitsgerät der in Rede stehenden Art insbesondere sicherheitstechnisch weiter zu verbessern.

Diese Aufgabe ist beim Gegenstand des Anspruches 1 gelöst, wobei darauf abgestellt ist, dass der Griffbereich zu dem Arbeitskopf durch einen aus elektrisch nicht leitfähigem Material bestehenden Radialkragen gesondert ist, der radial über den Griffbereich vorsteht oder durch einen an den Griffbereich arbeitskopfseitig anschließenden, sich axial erstreckenden Verjüngungsbereich zu dem Arbeitskopf gesondert ist, wobei ein radiales Vorstandsmaß und ein axiales Erstreckungsmaß des Verjüngungsbereiches einer Fingerdicke oder mehr entspricht und der Verjüngungsbereich einerends durch das Antriebsgeräteteil und axial anderenends durch einen elektrisch isolierten Radialabschnitt eines Wandungsabschnittes des Arbeitskopfes oder den Radialkragen begrenzt ist.

Der Hydraulikzylinder kann in Bezug auf das Antriebsgeräteteil elektrisch isoliert ausgebildet sein, wozu eine elektrisch isolierende Trennlage vorgesehen ist, die das Arbeitsgerät zur elektrischen Trennung von dem Antriebsgeräteteil im Bereich eines dem Antriebsgeräteteil zugewandten Endes des Hydraulikzylinders querend durchsetzt, wobei die Hydraulikleitung durch die Trennlage hindurchgeführt ist, unter Ausbildung auch eines Teilbereichs der Hydraulikleitung aus einem elektrisch isolierenden Werkstoff.

Bezüglich des Hydraulikkolbens kann ein elektrisch isolierender Kolbenkopf vorgesehen sein und/ oder der Hydraulikkolben kann in Richtung des Antriebgeräteteils nur soweit verfahrbar sein, dass ein größter Abstand zwischen einer Stelle des Kolbenkopfes und einem elektrisch leitfähigen Bereich des Antriebsgeräteteils einen zur elektrischen Isolierung notwendigen Abstand übertrifft.

Auch kann vorgesehen sein, dass der Hydraulikzylinder in Bezug auf das Antriebsgeräteteil elektrisch isoliert ausgebildet ist, wozu bevorzugt eine elektrisch isolierende Trennlage vorgesehen ist, die das Arbeitsgerät zur elektrischen Trennung von dem Arbeitsgeräteteil im Bereich eines dem Antriebsgeräteteil zugewandten Endes des Hydraulikzylinders querend durchsetzt, und wobei die Hydraulikleitung als Hydraulikschlauch sich zwischen einer Hydraulikmittel pumpe in einem Griffbereich des Arbeitsgerätes und dem Hydraulikzylinder erstreckt.

Auch kann vorgesehen sein, dass in einem Fügebereich des Hydraulikzylinders eine Abdichtung hinsichtlich Eintritt eines Fluids von außen in das hydraulisch betätigte Arbeitsgerät ausgebildet ist und dass hinsichtlich eines in dem Fügebereich möglichen, von innen entstehenden Hydraulikmitteldruckes ein Entlastungsventil zum Ablass von Hydraulikmittel nach außen vorgesehen ist.

Die vorgeschlagene Abdichtung im Fügebereich des Hydraulikzylinders kann, wie auch bevorzugt, einen Schutz gegen Eintreten eines Fluids von außen nach innen bieten. So kann hierdurch beispielsweise der Eintritt von Wasser oder Wasser enthaltenden Fluiden von außen nach innen verhindert werden. Das Eindringen von Wasser oder dergleichen kann zu Funktionsstörungen des Arbeitsgerätes, bis hin zum Aufbau von Spannungskriechwegen führen.

Darüber hinaus kann sich im Betrieb des Arbeitsgerätes, insbesondere im Fügebereich des Hydraulikzylinders, ein Hydraulikmitteldruck sich einstellen, der gegebenenfalls zu einem inkrementellen Austritt von Hydraulikflüssigkeit von innen nach außen führen kann. Ein solcher Hydraulikmittelaustritt kann gegebenenfalls gezielt vorgesehen sein. Hierzu können gegebenenfalls im Fügebereich des Hydraulikzylinders definierte Wege vorgesehen sein, über welche das Hydraulikmittel gegebenenfalls gerichtet nach außen austreten kann. Hierzu kann weiter, wie auch bevorzugt, ein Entlastungsventil vorgesehen sein, beispielsweise in Form eines Rückschlagventils. Dieses Entlastungsventil öffnet bevorzugt erst bei Überschreiten eines vorgegebenen Druckgrenzwertes. In der druckunbelasteten Grundstellung ist das Entlastungsventil bevorzugt geschlossen.

Das Arbeitsgerät ist insbesondere im Hinblick auf die Sicherheit des Nutzers bei einem Hantieren mit dem Arbeitsgerät beispielsweise im Hochspannungsbereich verbessert ausgebildet.

Der Hydraulikzylinder kann in üblicher Weise zweigeteilt ausgebildet sein, vergleiche EP 1 084 798 A2 (US 6,718,870 B1) unter Ausbildung somit eines mit einem Teil des Hydraulikzylinders versehenen abnehmbaren Arbeitskopf des Arbeitsgerätes und einem verbleibenden Teil des Arbeitsgerätes. In dem verbleibenden Teil des Arbeitsgerätes ist somit gegebenenfalls ein Teil oder der gesamte Hydraulikzylinder auch angeordnet, mit dem Hydraulikkolben oder einem Hydraulikkolbenkopf, wobei sich zudem noch zusätzlich eine funktionelle Unterteilung in einem Arbeitsgeräteteil des Arbeitsgerätes und einen verbleibenden, insbesondere den Arbeitskopf umfassenden Teil des Arbeitsgerätes ergibt. Der Arbeitsgeräteteil ist außerhalb und in Bezug auf den Arbeitskopf abgewandt zu dem Hydraulikzylinder vorgesehen.

Der Arbeitsgeräteteil ist entsprechend der im Hinblick auf die Trennlage beschriebenen Ausbildung gegenüber dem Arbeitskopf und jedenfalls dem Hydraulikzylinder elektrisch isoliert durch die Trennlage. Dadurch, dass bei dieser Ausgestaltung die Hydraulikleitung die Trennlage durchsetzt und ein Teilbereich der Hydraulikleitung aus einem elektrisch isolierenden Werkstoff besteht, verbleibt praktisch nur noch der freie Innenraum der Hydraulikleitung als nicht durchgehend durch die Trennlage gebildet, der aber im Betriebszustand mit Hydraulikmittel gefüllt ist. Das Hydraulikmittel, das üblicherweise ein Hydrauliköl ist, ist für sich auch elektrisch isolierend, so dass auf diese Weise eine vollständige elektrisch isolierende Trennung erreichbar ist.

Die Hydraulikleitung kann Teil, insbesondere fester Bestandteil des Arbeitskopfes und/oder des Griffbereiches sein, so weiter entsprechend Teil des bevorzugt handgeführten Arbeitsgerätes insgesamt. Bei einem solchen handgeführten Arbeitsgerät sind ein Akkumulator (oder gegebenenfalls ein Stromkabelanschluss), der elektrische Motor, eine Pumpe, ein Hydraulikmittel-Vorratsbehälter, die Hydraulikleitung und der Hydraulikzylinder mit dem Hydraulikkolben in einem einheitlichen, starren Gehäuse aufgenommen, das auch zugleich einen Griffbereich für eine Handbedienung, insbesondere auch eine Einhand-Bedienung, des Arbeitsgerätes ausbildet. Das Arbeitsgerät kann so insgesamt, mit dem über das Gehäuse vorragenden Arbeitskopf, frei bewegt und gehandhabt werden.

Wenn es auch im Hinblick auf die Ausbildung der Hydraulikleitung über einen wesentlichen Teil ihrer Länge aus einem elektrisch isolierenden Werkstoff bevorzugt ist, dass im Übrigen auch eine elektrisch isolierende Trennlage vorgesehen ist, die das Arbeitsgerät zur elektrischen Trennung von dem Arbeitsgeräteteil im Bereich eines dem Antriebsgeräteteil zugewandten Endes des Hydraulikzylinders querend durchsetzt, ist dies jedoch für die diesbezügliche Lehre der Erfindung nicht in jedem Fall erforderlich.

Die Hydraulikleitung kann, zumindest abschnittweise, aus einem Hydraulikschlauch bestehen, insbesondere zum Anschluss des Arbeitskopfes an ein Antriebsaggregat zur Erzeugung des Hydraulikdrucks. Ein solcher Hydraulikschlauch kann aus einem nicht elektrisch leitenden, hochdruckfesten Material bestehen, beispielsweise aus Geflechten von Aramidfasern.

Ein solcher Hydraulikschlauch kann unmittelbar oder auch mittelbar unter Zwischenschaltung eines geräteseitigen starren Hydraulikleitungsabschnittes an den Hydraulikzylinder angeschlossen sein, beispielsweise über eine Steck-/Rastverbindung oder über eine Schraubverbindung.

Bevorzugt ist die Hydraulikleitung beziehungsweise der Hydraulikschlauch über einen wesentlichen Teil der Länge aus einem elektrisch isolierenden Werkstoff gebildet, insbesondere im Anschlussbereich an den Hydraulikzylinder. Der elektrisch isolierende Werkstoff der Hydraulikleitung kann zufolge seiner Anordnung und längenmäßigen Ausbildung in der Nutzungsstellung des Arbeitsgerätes Teil der Trennlage sein, zur elektrischen Isolierung des Arbeitskopfes gegenüber dem vorgeschalteten Griffbereich (betrachtet entgegen der Wirkrichtung des Hydraulikdruckes im Betrieb des Arbeitsgerätes). So kann sich weiter die Isolierung der Hydraulikleitung ausgehend vom Anschluss an den Hydraulikzylinder zumindest über etwa 10 bis 12 mm erstrecken, dies bei einer bevorzugten Überschlagfestigkeit von etwa 10kV / cm. Darüber hinaus kann sich diese Isolierung des Hydraulikschlauches bis hin zu 50 mm oder mehr, beispielsweise sogar über 100 oder 1.000 mm bis hin zu beispielsweise 10.000 mm erstrecken. Bevorzugt ist bei Verwendung eines Hydraulikschlauches ein solcher vorgesehen, der eine Druckfestigkeit von 700 bar oder mehr aufweist und/oder einen Berstdruck von 2.800 bar oder mehr. Gegebenenfalls kann der isolierte Hydraulikschlauch im Wesentlichen allein die Verbindung zwischen dem Arbeitskopf und einem Antriebsgeräteteil darstellen.

Der vorgesehene Radialkragen zwischen dem Griffbereich und dem Arbeitskopf kann zum einen als optische Begrenzung zwischen Griffbereich und Arbeitskopf dienen, insbesondere als optische Begrenzung zwischen dem elektrisch isolierten Bereich und dem elektrisch gegebenenfalls nicht isolierten Arbeitskopfbereich. Darüber hinaus ergibt sich durch den Radialkragen in bevorzugter Ausgestaltung zudem eine mechanische Hinderung, insbesondere hinsichtlich eines Abgleitens der Hand oder einzelner Finger der das Arbeitsgerät im Griffbereich umfassenden Hand in Richtung auf den Arbeitskopf.

Bei Ausbildung des sich an den Griffbereich arbeitskopfseitig anschließenden Verjüngungsbereichs kann dieser arbeitskopfseitig begrenzt sein durch den Radialkragen. Der Verjüngungsbereich wirkt in Art eines Grabens, insbesondere zur Verhinderung eines Abgleitens der das Arbeitsgerät im Griffbereich erfassenden Hand oder einzelner Finger derselben in Richtung auf den Arbeitskopf.

Hierzu kann der Verjüngungsbereich ein gegenüber dem den Verjüngungsbereich einerends axial begrenzenden Abschnitt des Griffbereiches radiales Erstreckungsmaß und ein sich zwischen dem Griffbereich und dem Arbeitskopfbereich beziehungsweise dem Radialkragen ergebendes axiales Erstreckungsmaß aufweisen, welches einer Fingerdicke oder mehr entspricht, so weiter beispielsweise etwa mindestens 8 mm bis hin zu weiter beispielsweise 25 oder 30 mm oder mehr.

Der Radialkragen besteht aus einem elektrisch nicht leitfähigen Material. So kann weiter der Radialkragen Teil der elektrisch isolierenden Trennlage sein beziehungsweise eine nach radial außen verlängerte Ausführung dieser Trennlage.

Die genannte Trennlage ist nicht notwendig einteilig ausgebildet. Sie kann sich aus mehreren, gegebenenfalls über gewisse Abschnitte auch überlappend angeordneten Trennlagenteilen zusammensetzen.

Alternativ oder auch kombinativ zur Anordnung einer Trennlage, aber auch gegebenenfalls zu einer elektrisch isolierenden Ausbildung des Hydraulikzylinders, kann der Hydraulikkolben, insbesondere der diesbezügliche mit der Zylinderwandung zusammenwirkende Kolbenkopf, elektrisch isolierend ausgebildet sein. Zufolge einer solchen Maßnahme kann der Hydraulikkolben beispielsweise eine den Kolbenkopf überdeckende Isolationslage als Trennlage aufweisen, die aus Kunststoff oder einem Keramikwerkstoff bestehen kann. Es kann sich auch um einen Keramik-/Kunststoff-Verbundwerkstoff handeln. Auch kann der Kolbenkopf insgesamt aus einem elektrisch isolierenden Material gefertigt sein, so beispielsweise aus einem - bevorzugt druckfesten - Kunststoff oder aus Keramik.

Es kann eine Begrenzung der Verfahrbarkeit des Hydraulikkolbens in Richtung auf das Antriebsgeräteteil und somit bevorzugt in Richtung auf eine Grundstellung gegeben sein. Dies kann durch einen vorgesehenen Anschlag für den Hydraulikkolben, insbesondere den Kolbenkopf, gegeben sein. Ein solcher Anschlag kann weiter, wie auch bevorzugt, aus einem elektrisch isolierenden Werkstoff hergestellt sein, beispielsweise zugeordnet einem dem Kolbenkopf zugewandten Boden des Hydraulikzylinders.

Durch einen solchen Anschlag kann insbesondere in der vorbeschriebenen Grundstellung ein Mindestabstand zwischen dem Kolbenboden und insbesondere dem zugewandten Boden des Hydraulikzylinders eingehalten werden, welcher Abstand den zur elektrischen Isolierung notwendigen Abstand übertrifft. Der zur elektrischen Isolierung notwendige Abstand zwischen einem möglicherweise unter Spannung stehenden Teil und einem hierzu elektrisch zu isolierenden, elektrisch leitfähigen Teil beträgt bei einer üblichen Überschlagfestigkeit von etwa 10 kV/cm etwa 10 bis 12 mm. Dies insbesondere in solchen Fällen, wenn zwischen den betreffenden Geräteteilen Luft, gegebenenfalls Umgebungsluft, gegeben ist. Öl, wie beispielsweise Hydraulikmittel, weist zwar gegenüber Luft eine wesentlich bessere Isolationswirkung auf. Jedoch wird bevorzugt auch in einem solchen Fall ein notwendiger Abstand von 10 bis 12 mm eingehalten.

Dieser Minimalabstand wird in einer Stellung des Kolbenkopfes, insbesondere in der Grundstellung des Gerätes, übertroffen. So kann sich diesbezüglich ein minimaler Abstand von beispielsweise 12 bis 15 mm einstellen.

Der Hydraulikzylinder kann wandungsaußenseitig und/oder wandungsinnenseitig von der genannten Trennlage überdeckt sein. So kann eine außenwandungsseitige Überdeckung des Hydraulikzylinders mit einer Trennlage vorgesehen sein, bei welcher der Hydraulikzylinder dem Arbeitskopf zugeordnet ist. Eine wandungsinnenseitige Anordnung der Trennlage in dem Hydraulikzylinder bietet sich an bei Ausgestaltungen, bei welchen der Hydraulikzylinder dem Antriebsgeräteteil zugeordnet ist. Bei einer solchen Ausgestaltung kann die wandungsinnenseitig des Hydraulikzylinders vorgesehene Trennlage zugleich die Begrenzung der Verfahrbarkeit des Kolbenkopfes anbieten.

Darüber hinaus kann auch der Hydraulikzylinder, insbesondere dessen umlaufende Zylinderwandung, darüber hinaus gegebenenfalls zusätzlich oder auch nur ein Hydraulikzylinderboden, insgesamt aus einem elektrisch isolierenden Werkstoff gefertigt sein. Eine solche Ausgestaltung kann beispielsweise bei sogenannten Niederdruck-Arbeitsgeräten zur Anwendung kommen, weiter beispielsweise bei Arbeitsgeräten mit einem maximalen Hydraulikdruck von etwa 150 bar. Bei den üblichen hydraulischen Arbeitsgeräten mit einem Hydraulikdruck von bis zu 600 bar kommen bevorzugt Hydraulikzylinder aus einem Metallwerkstoff zum Einsatz.

Bezüglich der Anordnung zur Abdichtung eines Zwischenraumes zwischen zwei Teilen kann gegeben sein, dass die Anordnung gegen Eindringen eines Mediums von außen nach innen ausgelegt ist und wobei zugleich ein innen höherer Druck mittels der Anordnung abbaubar ist, wobei weiter die Anordnung ein geschlossen ringförmig umlaufendes, aus elastischem Werkstoff bestehendes Dichtungselement aufweist, das in einem Ausgangszustand unter Vorspannung in eine Dichtstellung an den beiden Teilen über seinen gesamten Umfang dichtend anliegt, wobei darüber hinaus über zumindest einen Teil des Umfangs eine Bewegung des Dichtungselements nach außen und Abheben von einem der Teile freigegeben ist, wobei weiter das Dichtungselement eine Ebene aufspannt und die Bewegung des Dichtungselementes senkrecht zu der Ebene nur über einen Teil des Umfangs freigegeben ist.

Zufolge einer solchen Ausgestaltung kann ein ventilartig wirkendes Dichtungselement zur Abdichtung eines Zwischenraumes zwischen zwei Teilen vorgesehen sein. Das Dichtungselement kann dabei in einer üblichen, unbelasteten Grundstellung, in welcher das Dichtungselement zufolge der gegebenen Vorspannung in einem den Zwischenraum zwischen den Teilen abdichtenden Dichtsitz einliegt, zunächst und allein eine Abdichtfunktion ausfüllen. Bevorzugt wirkt hierbei das Dichtungselement über dessen gesamtem Umfang dichtend gegen die angebotenen Flächen der beiden Teile. Ein Eindringen, insbesondere von Medium, von außen nach innen, entsprechend gegebenenfalls in einen elektrisch beaufschlagten oder elektrisch leitfähigen Bereich, darüber hinaus gegebenenfalls in einen beispielsweise Hydraulikbereich, ist so entgegengewirkt.

Dasselbe Dichtungselement kann jedoch zumindest über einen Teil dessen Umfangs bei entsprechender Druckbeaufschlagung von innen in Richtung nach außen ausweichen und dabei bevorzugt von einem der beiden Teile abheben, so dass ein Austrittsweg zumindest kurzfristig zum Abbau des inneren Druckes freigegeben wird. Die Verlagerung beziehungsweise Ausweichbewegung des Dichtungselementes zur Freigabe dieses Weges geschieht bevorzugt druckabhängig, entsprechend weiter bevorzugt mit Überschreiten eines vorgegebenen inneren, entsprechend von innen gegen das Dichtungselement wirkenden Druckes. Mit Überschreiten eines Druckschwellwertes, gegebenenfalls in Abhängigkeit von dem Elastizitätswert des Dichtungselementmaterials und/oder konstruktiver Gegebenheiten im Bereich des Dichtungssitzes, kann eine ventilartige Öffnung im Bereich des Dichtungselementes erreicht werden. Fällt der Druckwert im Zuge des Druckabbaus unter diesen Schwellwert zurück, fällt das Dichtungselement bevorzugt selbsttätig zufolge der elastischen Rückstellfähigkeiten in die bevorzugt über den gesamten Umfang wirkende Dichtungsstellung zurück.

Zufolge der vorbeschriebenen Ausgestaltung ist eine konstruktiv einfache und hinsichtlich der Anzahl benötigter Bauelemente günstige Anordnung zur Abdichtung eines Zwischenraumes zwischen zwei Teilen gegen Eindringen eines Mediums von außen nach innen gegeben, welche Anordnung zugleich ventilartig dazu genutzt sein kann, einen innen höheren Druck zufolge Öffnen eines Ablassweges nach außen abbauen zu können.

Eine Anordnung der in Rede stehenden Art kann in weiterer Ausgestaltung in einem hydraulisch betätigten Arbeitsgerät der vorbeschriebenen Art zur Anwendung kommen.

Bei einer möglichen Ausgestaltung kann vorgesehen sein, dass der Hydraulikzylinder einerseits außenseitig mit einer Trennlage umgeben ist und andererseits die zu dem Hydraulikzylinder führende und in diesen mündende Hydraulikleitung jedenfalls über einen Teil ihrer Länge innenseitig mit einer Trennlage ausgefüllt ist. Die Trennlagen sind außerhalb des Hydraulikzylinders so zusammengeführt, dass sich in Bezug auf eine Trennung zu dem Arbeitsgeräteteil eine praktisch geschlossene Trennlage, mit Ausnahme des Innenraums der Hydraulikleitung, ergibt.

Insofern kann weiter vorgesehen sein, die Hydraulikleitung eine Steck-Schnittstelle aufweist, in welcher metallische Abschnitte der Hydraulikleitung zusammengesteckt sind, die aber jeweils durch eine innere beziehungsweise äußere Trennlage voneinander elektrisch isolierend getrennt sind.

Ein den Hydraulikzylinder außenseitig umgebendes elektrisch isolierendes Teil kann mit einer Gewindeausbildung versehen sein, mit der es gewindemäßig mit einem metallischen Festteil des Arbeitsgeräteteiles verbunden ist. Diese bevorzugt gewindemäßige Verbindung erbringt eine, gegebenenfalls zusätzlich zu einer Trennmöglichkeit im Bereich des Hydraulikzylinders, gegebene Verbindung des Arbeitskopfes mit dem Arbeitsgeräteteil.

Zusätzlich zu einer innenseitigen Trennauskleidung kann die Hydraulikleitung auch außenseitig eine Trennummantelung aufweisen, die sich bis in einen Außenbereich des Hydraulikzylinders fortsetzen kann. Diese Trennummantelung kann gegebenenfalls im Bereich des Hydraulikzylinders auch eine Außenfläche des Arbeitsgerätes bilden.

Es ergibt sich so insbesondere in einer Nutzungsstellung des Arbeitsgerätes eine elektrisch isolierende Trennung zwischen dem gegebenenfalls mit beispielsweise einer Hochspannungsleitung in Kontakt kommenden Arbeitskopf und dem Antriebsgeräteteil, welcher für einen Nutzer zur Handhabung des Gerätes den Griffbereich und/oder Betätigungstasten aufweist. Die elektrische Trennung ist hierbei im Wesentlichen quergerichtet zu einer Längserstreckung des Arbeitsgerätes, insbesondere im Bereich des Übergangs des Arbeitskopfes in das Arbeitsgeräteteil, gegeben. Bevorzugt, gesehen in einem Querschnitt, ist die elektrische Trennung mit einer im Wesentlichen U-förmigen Gestaltung der isolierenden Trennlage gegeben.

Es kann vorgesehen sein, dass der Hydraulikzylinder relativ zu dem ihn umgebenden elektrisch isolierenden Teil, das bevorzugt feststehend mit dem Arbeitsgeräteteil verbunden ist, um eine Längsachse des Hydraulikzylinders drehbar ist. Hierdurch ergeben sich bekannte Handhabungsvorteile.

Die Trennlage kann gemäß einer Ausführungsform aus einem elektrisch isolierenden Keramikwerkstoff bestehen.

Alternativ oder kombinativ kann die Trennlage aus einem elektrisch isolierenden Kunststoff bestehen. So kann beispielsweise ein druckfester Kunststoff verwendet werden, weiter beispielsweise ein verstärkter Kunststoff, zum Beispiel faserverstärkter Kunststoff, wie GFK oder CFK. Hinsichtlich einer kombinativen Lösung kann ein Keramikwerkstoff mit einem Kunststoffanteil, oder eingelassenen Kunststoffteilen, als Verbundteil ausgebildet sein.

Darüber hinaus kann es sich bei dem Hydraulikzylinder auch um einen Kunststoffzylinder mit einem stabilisierenden Kern handeln. So kann weiter beispielsweise eine diesbezügliche Metallverstärkung mit dem elektrisch isolierenden Kunststoff umspritzt sein.

Kunststoffe, wie beispielsweise Polyamid, weisen eine Durchschlagfestigkeit von etwa 22 kV/mm auf. Um diese Durchschlagfestigkeit von 22 kV/mm auch bei Isolierung unter Nutzung einer Keramiklage zu erreichen (Keramik weist eine Durchschlagfestigkeit von etwa 10 kV/mm auf) ist im Vergleich zu einer isolierenden Kunststofflage eine mindestens die doppelte Dicke aufweisende Keramiklage notwendig. Einschließlich einer gewünschten Sicherheit ist so eine Keramiklage von mehr als einem Millimeter Dicke vorgesehen, sofern diese beispielsweise für den Hydraulikzylinder verwendet wird. Diesbezüglich wird eine Dicke einer solchen Keramiklage von 1,5 bis 3 mm oder mehr vorgesehen.

In weiterer Ausgestaltung sind auch, insbesondere in elektrisch zu isolierenden Bereichen des Arbeitsgeräts, Dichtungen, wie beispielsweise O-Ringe, möglichst auch aus einem isolierenden Material gefertigt. Übliche Dichtungen weisen einen hohen Anteil an Ruß auf und sind insofern auch leitfähig. Im Sinne der elektrischen Isolation des Antriebsgeräteteils zu dem Arbeitskopf werden insbesondere im betreffenden Bereich bevorzugt Dichtungen, wie beispielsweise O-Ringe, aus beispielsweise einem insoweit bevorzugt auch möglichst reinem Silikonmaterial eingesetzt.

Der Arbeitsgeräteteil des Arbeitsgerätes kann zusätzlich zu dem Motor und der Pumpe noch weitere Aggregate aufweisen, so beispielsweise einen Hydraulikmittel-Vorratsraum und/oder ein Getriebe und/oder einen Akkumulator und/oder ein Display und/oder eine Steuereinheit, gegebenenfalls mit einem Mikroprozessor, und/oder außenseitig geräteseitig vorstehende Bedienungselemente, wie insbesondere einen Bedienungsschalter.

Unabhängig von der genannten isolierenden Trennung zwischen dem Hydraulikzylinder und dem Arbeitsgeräteteil des Arbeitsgerätes kann in der beschriebenen Weise der Arbeitskopf, bevorzugt durch eine geteilte Ausbildung und gewindemäßige Verbindbarkeit des Hydraulikzylinders, auswechselbar vorgesehen sein. Die elektrische Isolierung kann sich zumindest auch über einen gewissen Teil der Länge des Hydraulikzylinders, beginnend an dem Ende, welches dem Arbeitsgeräteteil des Arbeitsgerätes zugewandt ist, erstrecken. Die Länge ist hierbei in Richtung einer Verfahrrichtung des Hydraulickolbens in dem Hydraulikzylinder gegeben.

Entsprechend kann bei einer solchen Ausgestaltung ein Arbeitsgeräteteil ausgebildet sein, das gegenüber herkömmlichen Arbeitsgeräteteilen im Hinblick auf eine elektrische Isolierung nicht gesondert ausgebildet ist. Es braucht für sich betrachtet im Hinblick auf einen Schutz gegen elektrische Hochspannung keine besonderen elektrischen isolierenden Maßnahmen aufzuweisen. Diese können sich auf die genannte Kunststofflage, welche durchsetzend beziehungsweise querend zu dem Arbeitsgerät ausgebildet ist, beschränken.

Der Nutzer eines solch ausgestalteten Arbeitsgerätes ist bei Arbeiten an Teilen unter Spannung (Hochspannung) vor einem Stromschlag geschützt.

Die die Isolierung bewirkenden Teile aus elektrisch isolierendem Kunststoff können beispielsweise im Kunststoff-Spritzverfahren hergestellt sein. Hierbei kann, wie auch bevorzugt, jedenfalls im Bereich der Auskleidung der Hydraulikleitung, ein Kunststoff zur Anwendung kommen, der geeignet ist zur Aufnahme von Druckkräften bis hin zu beispielsweise 90 bar.

Im Hinblick auf eine mögliche Abdichtung des Hydraulikzylinders in einem Fügebereich, insbesondere gegen Eintritt eines Fluides von außen in das hydraulikbetätigte Arbeitsgerät, kann die Abdichtung beziehungsweise die Anordnung gemäß einer möglichen Ausführungsform durch ein kreisringförmig durchgehendes Dichtungselement gebildet sein beziehungsweise ein solches Muster aufweisen. Zur Bildung eines solchen Dichtungselements kann weiter beispielsweise ein O-Ring dienen, insbesondere hergestellt aus einem thermoplastischen Material oder einem Gummiwerkstoff.

Das Dichtungselement kann darüber hinaus in einem im Fügebereich ausgebildeten Dichtsitz einsitzen, welcher Dichtsitz gegebenenfalls eine über den Umfang betrachtet zumindest partielle elastische Bewegbarkeit des Dichtungselements auch in der Nutzungsstellung zulassen kann.

Dies kann in weiterer Ausgestaltung beispielsweise dazu genutzt sein, dass das Entlastungsventil unter Nutzung des Dichtungselementes gebildet ist. Das Entlastungsventil und die Abdichtung können so gemeinsam durch im Wesentlichen nur ein Bauteil, nämlich durch das kreisringförmig durchgehende Dichtungselement, gebildet sein.

Dabei kann das Dichtungselement zur Bildung des Entlastungsventils über seinen Umfang einen Teilbereich aufweisen, der durch den Hydraulikmitteldruck in eine das Entlastungsventil öffnende Stellung bewegbar ist. Entsprechend kann bei Überschreiten eines vorgegebenen Hydraulikmitteldrucks im Fügebereich des Hydraulikzylinders das Dichtungselement partiell in eine Entlastungsstellung verlagerbar sein. Diese Verlagerung kann, wie auch bevorzugt, unterstützt sein zufolge einer elastischen Ausgestaltung des Dichtungselements, insbesondere in dem vorbezeichneten umfangsmäßigen Teilbereich.

In diesem Zusammenhang kann weiter bevorzugt sein, dass eine solche partielle und bevorzugt eingeschränkte Bewegung des Dichtungselementes ausschließlich bezüglich einer Öffnung im Sinne eines Entlastungsventils möglich ist, um so Hydraulikmittel gezielt von innen nach außen austreten lassen zu können. In entgegengesetzter Richtung - entsprechend von außen nach innen - ist hingegen bevorzugt keine elastische Ausweichbarkeit des Dichtungselementes möglich, so dass in dieser Richtung, bevorzugt auch bei verhältnismäßig hohem Druck, der gegebenenfalls gezielt vorgegebene Weg zum Austritt des Hydraulikmittels gegen Eintritt von Fluid von außen geschlossen bleibt.

Die Bewegbarkeit des Teilbereiches des Dichtungselementes kann gemäß einer möglichen Ausgestaltung durch eine Aussparung in einem das Dichtungselement aufnehmenden Dichtungssitz des Hydraulikzylinders oder einem mit dem Hydraulikzylinder im Fügebereich zusammenwirkenden Abschnitt des Antriebsgeräteteiles gegeben sein. Die Aussparung kann dabei so dimensioniert und positioniert sein, dass insbesondere bei Überschreiten eines Druckwertes des Hydraulikmittels im Fügebereich ein Ausweichen eines Teilbereiches des Dichtungselements zur Bildung des Entlastungsventils in Richtung auf diese Aussparung ausweichen kann. So kann weiter in einer möglichen Ausgestaltung erst durch Ausbildung einer solchen Aussparung die Beweglichkeit des Dichtungselement-Teilbereiches erreichbar sein. Eine solche Aussparung kann, wie auch bevorzugt, - über den Umfang betrachtet - sich über einen Teilbereich erstrecken, während über den weiteren, nicht ausgesparten Bereich das Dichtungselement sich auch in der Überdruckstellung beziehungsweise in der Entlastungsventilstellung dichtend abstützen kann.

Bei Anordnung einer solchen Abdichtung in einem Arbeitsgerät, welches zur elektrischen Trennung eine querend durchsetzende elektrisch isolierende Trennlage aufweist, kann die Abdichtung zwischen einem elektrisch leitfähigen Gehäuseabschnitt des Arbeitsgeräteteiles oder des Hydraulikzylinders und der elektrisch isolierenden Trennlage gegeben sein. Dabei kann weiter die vorbeschriebene Aussparung im Bereich des elektrisch leitfähigen Gehäuseabschnittes oder des elektrisch leitfähigen Hydraulikzylinders gegeben sein und/oder alternativ im Bereich der elektrisch isolierenden Trennlage.

In weiterer Ausgestaltung können zwei Abdichtungen gegen Eintritt von Fluid von außen und/oder zur Ausbildung von Entlastungsventilen vorgesehen sein. Diese zwei Abdichtungen können gemäß einer möglichen Ausgestaltung mit Bezug auf die bevorzugte ringförmige Ausbildung der Dichtungselemente im Wesentlichen konzentrisch, jedoch axial zueinander beabstandet angeordnet sein.

Das Dichtungselement kann eine Ebene aufspannen, so beispielsweise, wie auch bevorzugt, eine senkrecht zu einer Rotationsachse des Dichtungselements aufgespannte Ebene, in welcher Ebene zugleich eine größte Erstreckung des Dichtungselementes, so weiter beispielsweise ein größter Durchmesser, gegeben sein kann.

Die Bewegung des Dichtungselementes bei Freigabe eines Ablassweges zum Druckabbau von innen nach außen kann gemäß einer möglichen Ausgestaltung in der Ebene nach außen gegeben sein. So kann weiter bei einer beispielhaften kreisrunden Ausgestaltung des Dichtungselementes, beispielsweise bei Ausbildung in Form eines O-Ringes, eine solche Ausweichbewegung nach außen, insbesondere nach radial außen sich ergeben, unter zumindest partieller Vergrößerung des Dichtungselements über den Durchmesser im vorgespannten Zustand hinaus.

Bevorzugt durch die elastisch rückstellfähige Ausgestaltung des Dichtungselementes kann bei einer solchen Bewegung nach außen eine Dehnung von Teilbereichen des Dichtungselementes und/oder gegebenenfalls eine Stauchung anderer Teile des Dichtungselementes erreicht sein, um so auch unter Abheben eines Teilbereichs des Dichtungselementes von einem der abzudichtenden Teile einen Auslassweg freizugeben.

Darüber hinaus kann alternativ oder auch kombinativ zu einer nach außen gerichteten Bewegung eine senkrecht zu der Ebene gegebene Bewegung erreicht sein. Bewegt sich ein beispielsweise ringförmiges Dichtungselement bei einer Bewegung nach außen bevorzugt partiell über den äußeren Durchmesser hinaus, so kann bei einer senkrecht zu der Ebene sich einstellenden Bewegung gegebenenfalls eine Streckung des betroffenen Teils des Dichtungselementes innerhalb einer Projektionsfläche des Dichtungselementes in Achsrichtung desselben erreicht sein.

In weiterer Ausgestaltung kann die Bewegung des Dichtungselementes senkrecht zu der Ebene überlagert sein von einer Bewegung des Dichtungselementes in der Ebene nach außen. Der ventilartig hierbei wirkende Abschnitt des Dichtungselementes kann zufolge dieser Ausgestaltung gegebenenfalls aus der Ebene heraus und über den Umfang des Dichtungselementes in der Dichtungsstellung hinaus in eine Ventiloffenstellung ausweichen.

Die im Zwischenraum gegeneinander abzudichtenden Teile können gemäß einer möglichen Ausgestaltung zueinander unbeweglich sein, so insbesondere bezüglich einer möglichen Rotationsrichtung um eine gemeinsame Längsachse und/oder bezüglich einer linearen Richtung entlang beispielsweise einer Rotationsachse. So können weiter die Teile Teile eines Arbeitsgerätes, beispielsweise eines hydraulisch betätigbaren Arbeitsgerätes sein.

An einem der Teile kann in einer möglichen Ausgestaltung eine Schrägfläche ausgebildet sein, über welche sich das Dichtungselement, gegebenenfalls in einem bestimmten Umfangsbereich, bei einem Druckabbau bewegen kann. So kann sich weiter das Dichtungselement bevorzugt über einen bestimmten Umfangsbereich, weiter bevorzugt über einen geringen Umfangsbereich von beispielsweise 5 bis 20 Prozent, weiter beispielsweise etwa 7 bis 15 Prozent des gesamten Umfangs, zum Druckabbau entlang der Schrägfläche bewegen. Die Schrägfläche kann hierbei, wie weiter bevorzugt, derart angeordnet sein, dass sich in Richtung der Bewegung des Dichtungselementabschnittes bei Druckabbau eine Steigung ergibt.

Die Schrägfläche kann demnach unterstützend auf das Dichtungselement einwirken, insbesondere im Hinblick auf eine selbsttätige Rückverlagerung in den vollständigen Dichtsitz.

Auch kann die Bewegung des Dichtungselementes senkrecht zu der Ebene nur (ausschließlich) in einer Richtung freigegeben sein. In der entgegengesetzten Richtung hierzu kann durch konstruktive Maßnahmen an dem einen Teil eine entsprechende Verlagerung verhindert sein. Die Ausweichbewegung des Dichtungselementes, insbesondere des Teilabschnitts des Dichtungselementes, kann so, wie auch bevorzugt, vorgegeben sein.

Darüber hinaus kann die Bewegung des Dichtungselementes senkrecht zu der Ebene nur über einen Teil des Umfangs freigegeben sein, so beispielsweise über 5 bis 30 Prozent des Umfanges, weiter beispielsweise 7 bis 15 Prozent des Umfangs. Der darüber hinausgehende Umfangsbereich des Dichtungselementes verbleibt bevorzugt auch in der Bewegungsstellung zur Ermöglichung eines Druckabbaus von innen nach außen im Dichtsitz.

Die Vorspannung des Dichtungselementes kann gemäß einer möglichen Ausgestaltung durch eine Umfangslänge des Dichtungselementes vorgegeben sein. Dabei kann das Dichtungselement im Dichtsitz zum Abdichten gegen Eintritt eines Mediums von außen nach innen unter Vorspannung in dem Dichtsitz einliegen, d.h. mit Bezug auf eine mögliche Ausgestaltung des Dichtungselementes als O-Ring in der Dichtsitzstellung einen größeren Durchmesser aufweisend als in einer unbelasteten Stellung des Dichtungselementes, insbesondere einer Nichteinbaustellung.

Aus dieser vorgespannten Grundstellung in der Dichtungsstellung heraus kann das Dichtungselement zumindest partiell über den Umfang bei Überschreiten eines entsprechenden Druckwertes an der Innenseite sich vom Dichtsitz fortbewegen und ventilartig einen Ablassweg freigeben.

Dabei kann weiter die Vorspannung durch eine Spaltbreite zwischen den Teilen alternativ oder auch kombinativ zu der Vorspannung über die Umfangslänge vorgegeben sein.

Zur Freigabe der Bewegung des Dichtungselementes kann an einem der Teile eine quer zur Ebenenerstreckung gegebene Anlagefläche nur über einen Teil des Umfangs ausgebildet sein. Die Anlagefläche des korrespondierenden anderen Teils hingegen ist dabei bevorzugt über den gesamten Umfang gegeben.

Hieraus ergibt sich allein über einen Teil des Umfangs eine Unterbrechung der Anlagefläche für das Dichtungselement, in welchen sich hierdurch ergebenden Freiraum senkrecht zur Ebenenerstreckung der zugeordnete Teilabschnitt des Dichtungselementes zur Freigabe eines Ablassweges ausweichen kann.

Ein Arbeiten unter Spannung, insbesondere Hochspannung, birgt für den Benutzer des Hand-Arbeitsgerätes bekanntermaßen große Gefahren. Lösungen, die eine entsprechende Sensorik zur Erfassung einer elektrischen Spannung aufweisen, sollen hier eine entsprechende Warnung auslösen, beispielsweise in Form eines Licht- und/oder Tonsignals.

In diesem Zusammenhang kann vorgesehen sein, dass ein Sensor zur Funkverbindung mit einem Empfänger außerhalb des Hand-Arbeitsgerätes ausgebildet ist. Die Funkverbindung kann in üblicher Weise über ein Netzwerk (beispielsweise WLAN oder WPAN) erfolgen, darüber hinaus aber auch im Bereich der Nahfeldkommunikation, beispielsweise über Bluetooth.

Die Funkverbindung kann dazu geeignet sein, dass das diesbezügliche Hand-Arbeitsgerät mit dem Empfänger oder einer Mehrzahl an Empfängern korrespondieren und sich mitteilen kann, wenn dieses Hand-Arbeitsgerät eine elektrische Spannung detektiert.

Über die Funkverbindung kann diese Mitteilung an eine, gegebenenfalls zentrale, Erfassungsstelle gesendet werden, beispielsweise zur Protokollierung des Arbeitsvorganges. Darüber hinaus führt eine solche Spannungs-Detektierung zur Auslösung einer entsprechenden Warnung an dem detektierenden Arbeitsgerät, welche Warnung als entsprechend kodiertes Signal über die Funkverbindung auch an einen oder mehrere Empfänger weitergeleitet werden kann, so weiter beispielsweise auch an weitere Hand-Arbeitsgeräte, die gegebenenfalls im selben Bereich oder in demselben Raum genutzt werden oder genutzt werden sollen.

Zur Funkverbindung ist das Hand-Arbeitsgerät entsprechend mit einem Sender versehen, darüber hinaus gegebenenfalls zusätzlich auch mit einem Empfänger.

Zur Funkverbindung über ein mögliches Mobilfunknetz kann das Hand-Arbeitsgerät mit einem entsprechenden Modul versehen sein, weiter gegebenenfalls aufweisend eine SIM-Karte.

Zur Nutzung eines möglichen Mobilfunknetzes kann das Hand-Arbeitsgerät darüber hinaus ein Nahfeld-Kommunikationsmodul, wie beispielsweise ein Bluetooth-Modul, aufweisen, zur unmittelbaren Kommunikation beispielsweise mit einem Mobilfunkgerät, das der das Hand-Arbeitsgerät tragende Benutzer bei sich trägt. Über dieses Mobilfunkgerät ist die gewünschte Kommunikation und Weiterleitung von entsprechenden Mitteilungen an andere Empfänger ermöglicht.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in perspektivischer Darstellung ein Arbeitsgerät in einer ersten Ausführungsform;
- Fig. 2: das Arbeitsgerät gemäß Figur 1 in einer partiell geschnittenen Seitenansicht;
- Fig. 3: die Herausvergrößerung des Bereiches III in Figur 2;
- Fig. 4: die Schnittdarstellung gemäß Figur 3, betreffend eine zweite Ausführungsform;
- Fig. 4a: die Herausvergrößerung des Bereichs IVa in Figur 4;
- Fig. 5: eine perspektivische Darstellung eines Arbeitsgerätes in einer dritten Ausführungsform;
- Fig. 6: das Arbeitsgerät gemäß Figur 5 in einer Seitenansicht;
- Fig. 7: die Herausvergrößerung des Bereichs VII in Fig. 6 in einer Schnittdarstellung;
- Fig. 8: eine vierte Ausführungsform in einer Darstellung gemäß Figur 3;
- Fig. 9: eine Schnittdarstellung gemäß Figur 4, betreffend eine weitere Ausführungsform;
- Fig. 10: eine der Figur 4 entsprechende Darstellung, betreffend eine alternative Ausgestaltung;
- Fig. 11: eine im Wesentlichen der Figur 9 entsprechende Schnittdarstellung, betreffend eine weitere Ausführungsform;
- Fig. 12: die Herausvergrößerung des Bereiches XII in Figur 11, nebst einer vergrößerten Lupendarstellung;
- Fig. 13: den vergrößerten Schnitt gemäß der Linie XIII-XIII in Figur 12;
- Fig. 14: eine Ausschnittdarstellung gemäß Figur 12 nebst einer dazugehörigen Lupendarstellung;
- Fig. 15: den vergrößerten Schnitt gemäß der Linie XV-XV in Figur 14;
- Fig. 16: in einer perspektivischen Explosionsdarstellung einen Arbeitskopf des Arbeitsgerätes mit einem Arbeitszylinder sowie einer Trennlage mit zwei Dichtungselementen und einem Festteil;
- Fig. 17: die Trennlage in einer weiteren perspektivischen Darstellung, nebst einer lupenartigen Vergrößerungsdarstellung;
- Fig. 18: ein Arbeitsgerät in weiterer Ausführungsform;
- Fig. 19: ein Arbeitsgerät in einer weiteren Ausführungsform;
- Fig. 20: ein Hand-Arbeitsgerät mit einem Sensor zur Erfassung einer elektrischen Spannung und einer Funkverbindung zu einem Empfänger.

### Beschreibung der Ausführungsformen

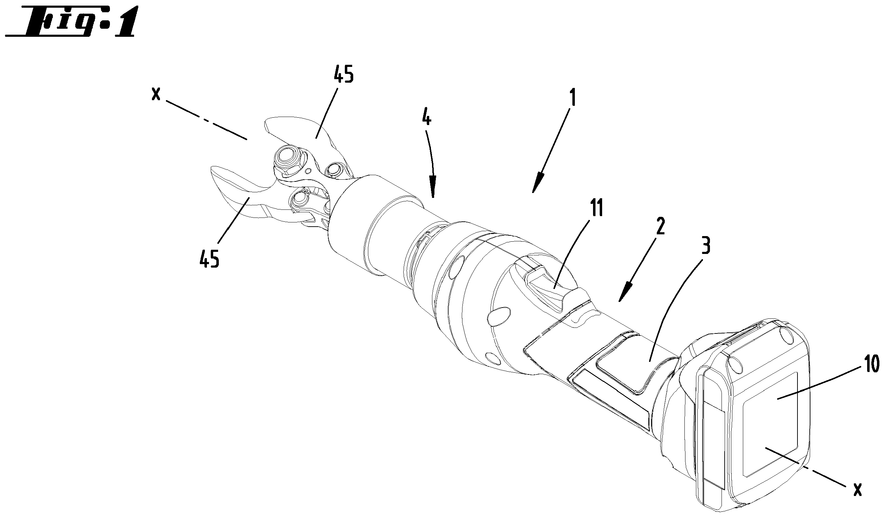

Dargestellt und beschrieben ist, zunächst mit Bezug zu der Darstellung in Figur 1, ein Arbeitsgerät 1, hier in Form eines elektro-hydraulisch betätigbaren Schneidgerätes in stabartiger Ausgestaltung. Ein derart ausgebildetes Arbeitsgerät 1 ist aus der eingangs zitierten WO 2003/084719 A2 (US 7,254,982 B2) bekannt. Der Inhalt dieser WO-Schrift beziehungsweise US-Schrift wird hiermit vollinhaltlich in die Offenbarung vorliegender Erfindung mit einbezogen, auch zu dem Zweck, Merkmale dieser WO-Schrift beziehungsweise US-Schrift in Ansprüche vorliegender Erfindung mit einzubeziehen.

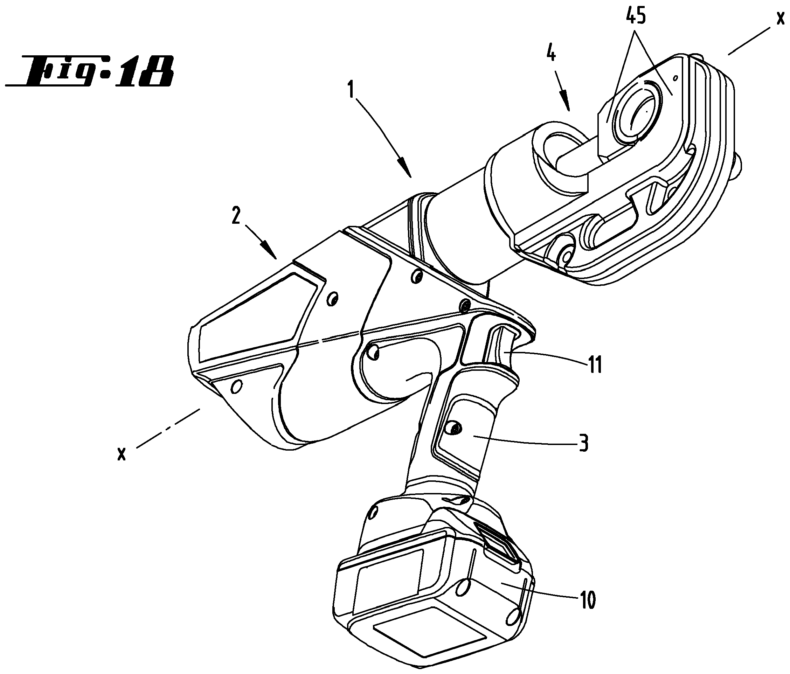

Wie weiter beispielhaft in der Darstellung in Figur 18 zu erkennen, kann ein solches Arbeitsgerät 1 auch beispielsweise als Verpressgerät in pistolenartiger Ausgestaltung vorliegen. Ein derartiges Arbeitsgerät 1 ist aus der eingangs zitierten WO 2014/108361 A1 (US 2015/0364889 A1) bekannt. Auch der Inhalt dieser WO-Schrift beziehungsweise US-Schrift wird hiermit vollinhaltlich in die Offenbarung vorliegender Erfindung mit einbezogen, auch zu dem Zweck, Merkmale dieser WO-Schrift beziehungsweise US-Schrift in Ansprüche vorliegender Erfindung mit einzubeziehen.

Das Handgerät 1 weist zunächst und im Wesentlichen ein Antriebsgeräteteil 2 auf, welches im Falle einer stabartigen Ausgestaltung gemäß Figur 1, aber auch bei einer pistolenartigen Ausbildung gemäß Figur 18 zugleich einen Griffbereich 3 ausformt. Im Falle einer pistolenartigen Ausgestaltung des Arbeitsgerätes 1 gemäß der Darstellung in Figur 18 erstreckt sich der Griffbereich 3 im Wesentlichen quergerichtet zu dem Antriebsgeräteteil 2.

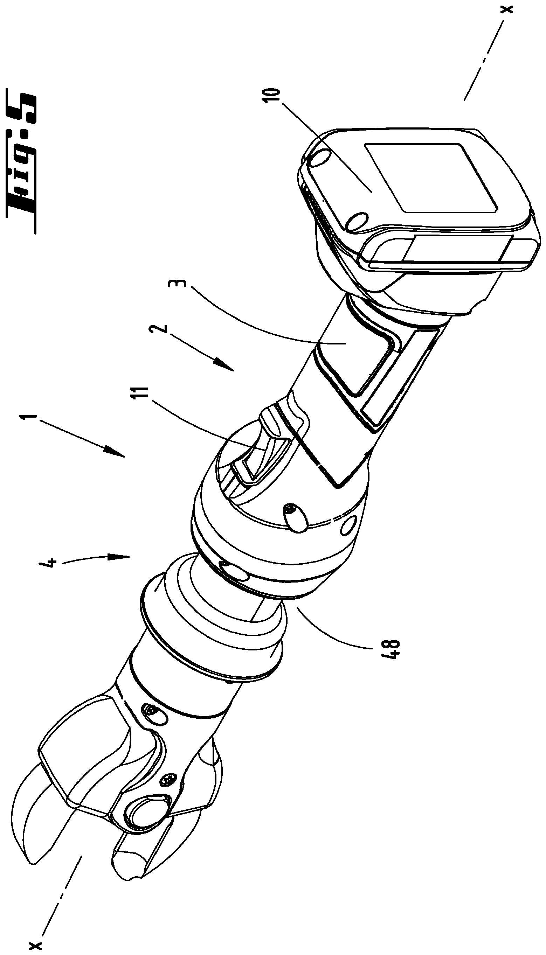

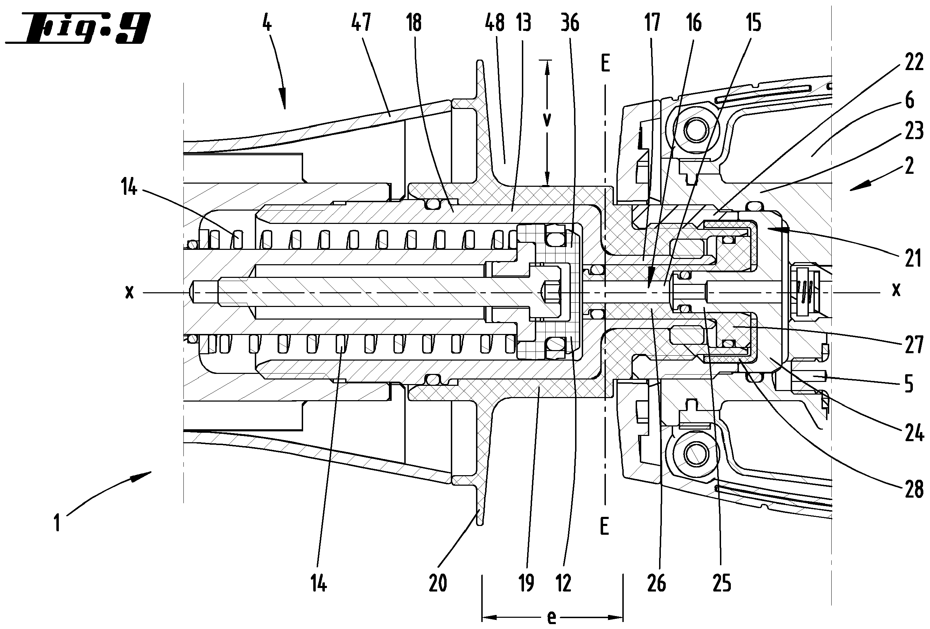

An den Antriebsgeräteteil 2 schließt sich zu einem freien Ende des Arbeitsgerätes hin ein Arbeitskopf 4 an, der in dem in den Figuren 1 und 5 dargestellten Ausführungsbeispielen zwei Schneidbacken 45 aufweisen kann. Der jeweils dargestellte Arbeitskopf 4 ist nur exemplarisch. So kann der Arbeitskopf gemäß Figur 9 beispielsweise auch Pressbacken 46 aufweisen. Bevorzugt ist der Arbeitskopf 4 auswechselbar gehaltert, weiter bevorzugt durch eine Trennung im Bereich des Hydraulikzylinders 13, siehe auch weiter unten. Darüber hinaus kann, wie auch bevorzugt, der Arbeitskopf 4 um eine Arbeitskopf-Längsachse x relativ zu dem Antriebsgeräteteil 2 beziehungsweise der diesbezüglichen Aufnahme 23 für den Arbeitskopf 4 frei drehbar gehaltert sein.

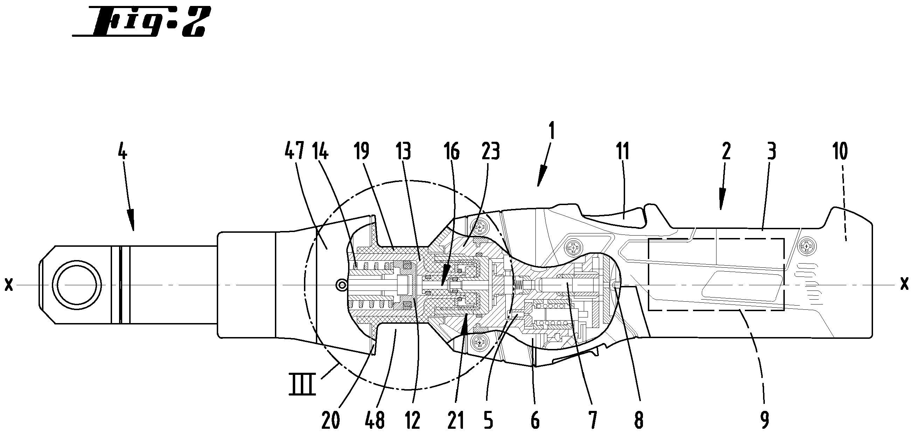

Mit Bezug beispielsweise zu der Darstellung in Figur 2 ist der Zusammenhang mit dem in der genannten EP 1 519 813 B1 beschriebenen Gegenstand etwa im Hinblick auf ein Rücklaufventil 5, einen Tank 6 und einen Pumpstößel 7 zu erkennen. In diesem Zusammenhang ist insgesamt auch zu erkennen, dass eine Hydraulikmittelpumpe 8 und ein Elektromotor 9 für die Hydraulikmittelpumpe 8 in Hintereinanderanordnung vorgesehen sein können. Die elektrische Versorgung insbesondere des Elektromotors 9, darüber hinaus aber auch einer nicht dargestellten Steuerungseinheit und weiterer elektrischer Komponenten in dem Arbeitsgerät ist gegeben durch die Anordnung eines Ackumulators 10.

Der Griffbereich 3 ist zur üblichen Umfassung des Arbeitsgeräte-Gehäuses mittels einer Hand ausgebildet. Ergonomisch günstig ist zugeordnet dem Griffbereich 3 eine Betätigungstaste 11 vorgesehen.

Insbesondere die vorstehend genannten Komponenten Rücklaufventil 5, Tank 6, Hydraulikmittelpumpe 8 mit Pumpstößel 7, Elektromotor 9, die Steuerungseinheit und weitere elektrische Komponenten, wie auch die Betätigungstaste 11, sind bevorzugt insgesamt Teile des Antriebsgeräteteils 2.

Zur Verlagerung einer Arbeitsbacke, beispielsweise Schneidbacke 45 oder Pressbacke 46, im Arbeitskopf 4 ist ein Hydraulikkolben 12 vorgesehen. Dieser ist entlang der Achse x in einem Hydraulikzylinder 13 gegen die Kraft einer Rückstellfeder 14 verlagerbar.

Im Betrieb des Arbeitsgerätes 1 wird bei entsprechender Betätigung der Betätigungstaste 11 über den Pumpstößel 7 Hydraulikmittel 15 über eine Hydraulikleitung 16 in den Hydraulikzylinder 13 gepumpt, zur entsprechenden Beaufschlagung der dem Hydraulikmittel 15 zugewandten Kolbenstirnfläche.

Der Hydraulikkolben 12, bevorzugt im Hinblick auf eine Teilbarkeit gemäß der genannten EP 1 084 798 A2 beziehungsweise US 6,718,870 B1 in Bezug auf eine Hydraulikkolbenstange, der Hydraulikzylinder 13 oder im Sinne der genannten Teilbarkeit bevorzugt ein Teil des Hydraulikzylinders 13 können Teile des Arbeitskopfes 4 sein.

Der Hydraulikzylinder 13 kann gemäß der Ausführungsformen der Figuren 1 bis 4 einen Teil einer in diesen mündenden Hydraulikleitung 16 aufweisen, die beim Ausführungsbeispiel als konzentrisch zur Achse x verlaufender Hals 17 ausgebildet ist. Entsprechend ist dieser Hals 17 gegenüber der Wandung 18 des Hydraulikzylinders 13 durchmesserverringert.

In dem Hals 17 ist steckgeführt oder steckgehaltert ein Fortsetzungsteil 24 der Hydraulikleitung 16. Im Inneren des Halses 17 ist ein Auskleidungsteil 26 aus einem elektrisch isolierenden Werkstoff angeordnet, das sich im Hinblick auf den überlappend zu dem Fortsetzungsteil 24 angeordneten Abschnitt des Halses 17 auch in diesem Überlappungsbereich erstreckt und somit eine elektrisch isolierende Trennung zu dem Fortsetzungsteil 24 erbringt.

Der Hydraulikzylinder 13 ist umgeben von einer elektrisch isolierenden Trennlage 19. Die Trennlage umfasst über den gesamten Umfang den Hydraulikzylinder 13 im Bereich der Wandung 18 des Hydraulikzylinders 13. Darüber hinaus umfasst die Trennlage auch den Bereich des Halses 17 einschließlich des Übergangs der Wandung 18 in den Hals 17.

Die Trennlage 19 wie auch das Auskleidungsteil 26 und nachstehend auch weiter aufgeführte Teile und Bereiche, die im Sinne der Erfindung elektrisch isolierend wirken, können aus einem Keramikwerkstoff bestehen oder alternativ, wie auch zumeist bevorzugt, aus einem elektrisch isolierenden Kunststoff.

Die Trennlage 19 erfährt eine Fortsetzung durch das Auskleidungsteil 26 im Inneren der Hydraulikleitung 16, durch eine auch ein freies Ende des Halses 17 übergreifende Ausformung des Auskleidungsteils 26. Die Trennlage 19 ist in ihrer Erstreckung entlang dem Hals 17 beziehungsweise auch entlang und bevorzugt teilweise eingeschachtelt in das Fortsetzungsteil 24 bis in Überdeckung somit zu dem Auskleidungsteil 26 ausgebildet.

Zugeordnet einem freien Ende des Halses 17 kann beispielsweise mittels eines Sprengrings eine Steckhalterung gegenüber der Trennlage 19 des Hydraulikzylinders 13 gegeben sein. Da die Trennlage 19 formschlussverbunden, bevorzugt gewindeverbunden, mit einer Festteilwandung des Arbeitsgeräteteiles ist, ist hierdurch die Halterung insgesamt erreicht.

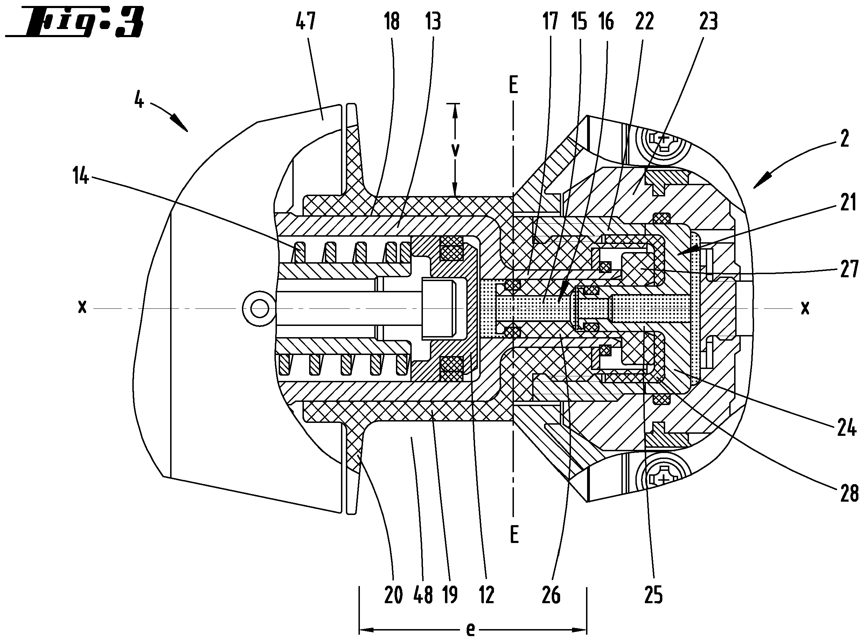

Ein die Wandung 18 des Hydraulikzylinders 13 umgebender Abschnitt der Trennlage 19 ist bei dem dargestellten Ausführungsbeispiel und damit bevorzugt, mit einem tellerartigen Radialkragen 20 versehen. Die Trennlage 19 erstreckt sich ausgehend von dem Hals 17 über den Bereich des Radialkragens 20 hinaus (vergleiche insbesondere Figuren 3, 4 und 9).

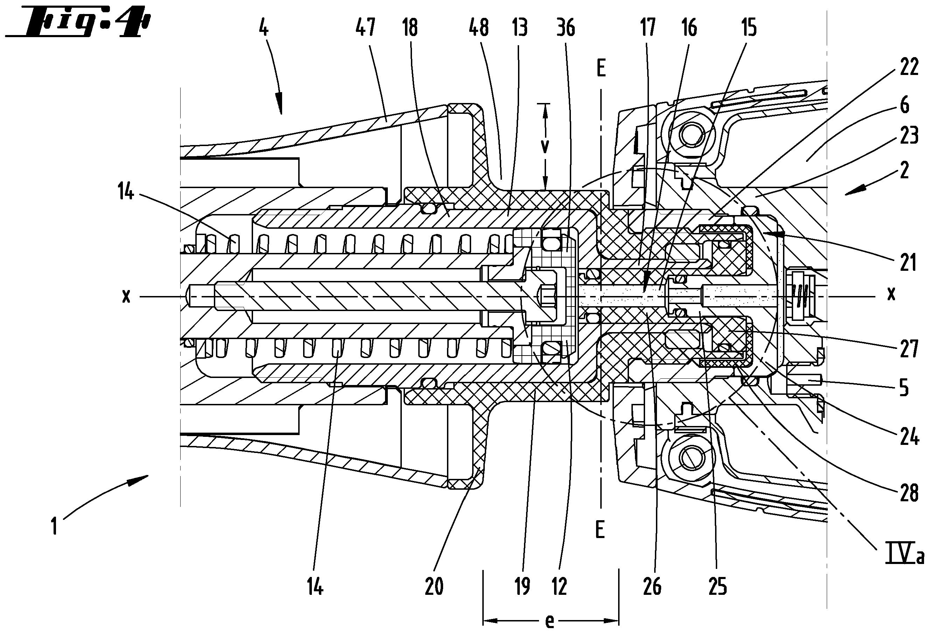

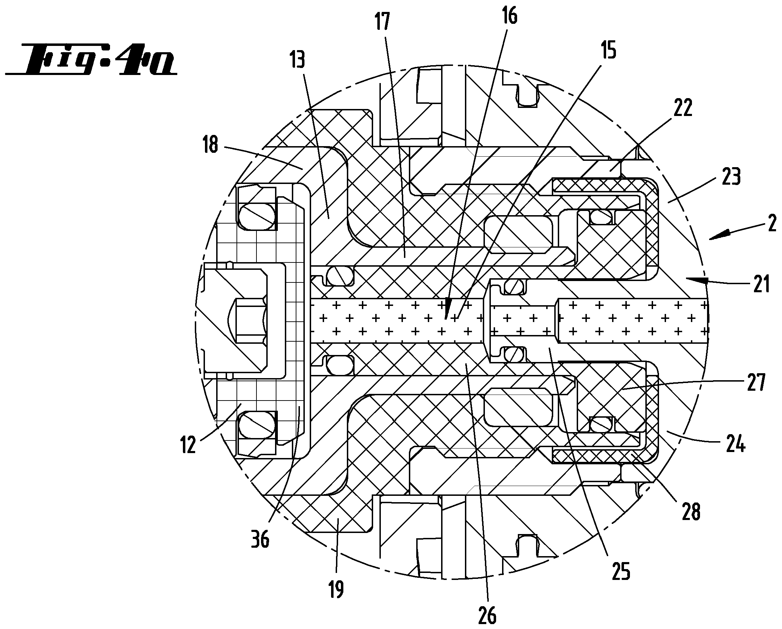

Der Radialkragen 20 kann, wie beispielsweise bei dem in Figur 4 dargestellten Ausführungsbeispiel, eine bezogen auf die Achse x betrachtete Radialerstreckung aufweisen, die im Wesentlichen der Radialerstreckung des sich an den Radialkragen 20 anschließenden Wandungsabschnitts 47 des Arbeitskopfes 4 entsprechen kann.

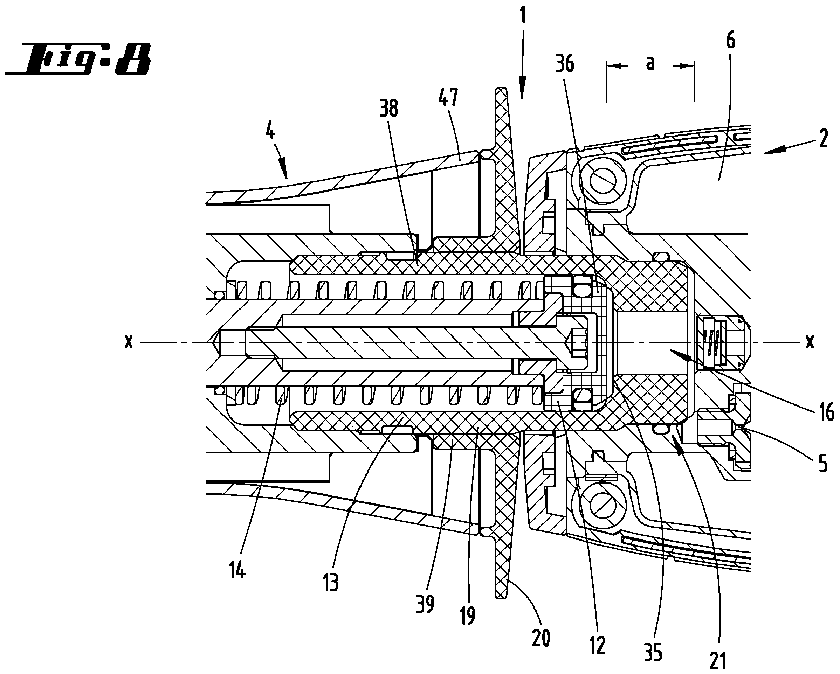

Wie weiter aus der Darstellung in Figur 9 ersichtlich, darüber hinaus auch gemäß der Darstellung in Figur 8, kann sich der Radialkragen 20 jedoch auch radial über diesen Wandungsabschnitt 47 hinaus erstrecken, beispielsweise mit einem radialen Überstandsmaß über den Wandungsabschnitt 47 von 5 mm bis hin zu 15 mm oder 20 mm oder mehr Millimetern.

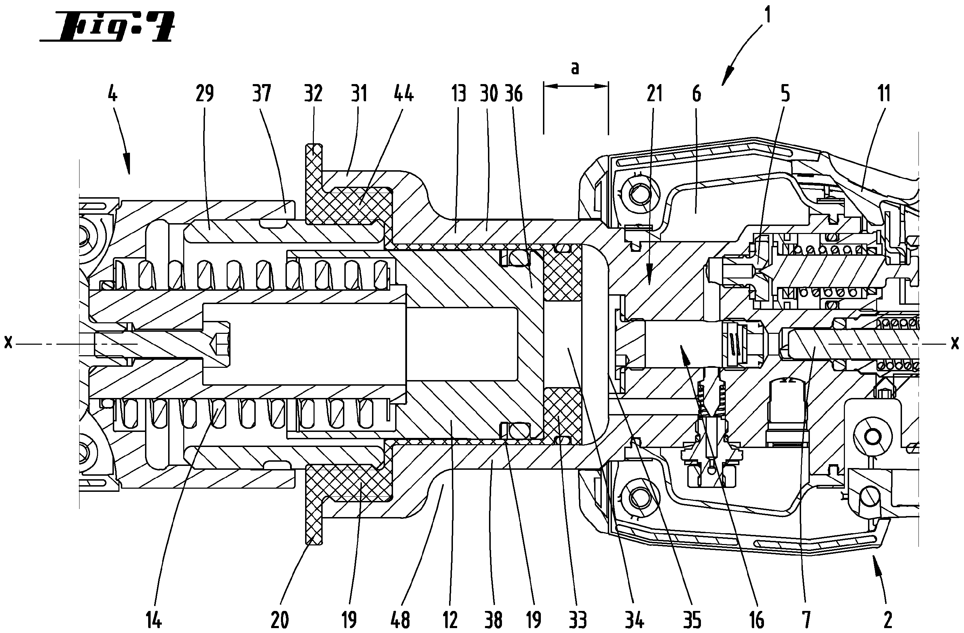

Insbesondere gemäß den Ausführungsbeispielen in den Figuren 4 und 9, darüber hinaus auch gemäß Figur 7, ergiebt sich zwischen dem Griffbereich 3 und dem den Griffbereich 3 zu dem Arbeitskopf 4 begrenzenden Radialkragen 20 ein Verjüngungsbereich 48. Dieser ist in Axialrichtung begrenzt einerends durch das Antriebsgeräteteil 2 beziehungsweise den Griffbereich 3 und axial anderenends durch den Radialkragen 20, gegebenenfalls durch einen elektrisch isolierten Radialabschnitt des Wandungsabschnittes 47 zur Bildung eines solchen Radialkragens 20.

Es ergibt sich so insbesondere zwischen dem Griffbereich 3 und dem Arbeitskopf 4 ein mit Bezug auf die Achse x bevorzugt umlaufender Graben, zur Hinderung eines Abgleitens der das Arbeitsgerät erfassenden Hand von dem Griffbereich 3 in Richtung auf den Arbeitskopf 4.

Hierzu ist in geeigneter Weise der Verjüngungsbereich 48 mit einem axialen Erstreckungsmaß e zwischen den aufeinander zu weisenden Stirnflächen des Griffbereiches 3 beziehungsweise des Antriebsgeräteteiles 2 und dem Radialkragen 20 versehen, welches Erstreckungsmaß e zumindest einer Fingerdicke, entsprechend bevorzugt zumindest 8 mm, darüber hinaus weiter bevorzugt mehr als 8 mm, beispielsweise bis hin zu 20 oder 30 mm oder mehr, entspricht.

Auch das radiale Vorstandsmaß v des Radialkragens 20 über den halsartig den Arbeitskopf 4 mit dem Griffbereich 3 verbindenden Abschnitt der Trennlage 19 beziehungsweise des Hydraulikzylinders 13 und dabei den Boden des Verjüngungsbereiches 48 bildend, kann, wie bevorzugt, auch zumindest einer Fingerdicke entsprechen, weiter bevorzugt beispielsweise 8 mm oder mehr, so gegebenenfalls bis hin zu 15 oder 20 mm oder mehr.

Im Bereich des den Hals 17 umfassenden Abschnitts der Trennlage 19 ist die Trennlage 19 wandungsaußenseitig umfangsmäßig vollständig umfasst von dem schon genannten insgesamt topfförmigen Festteil 21, das zugleich auch bei dem Ausführungsbeispiel und damit bevorzugt, den bereits angesprochenen Teil der Hydraulikleitung ausbildet. Das Festteil 21, wie auch der Hydraulikzylinder 13 selbst einschließlich des Halses 17, besteht aus einem metallischen Material, bevorzugt aus Stahl. Die umlaufende Festteilwandung 22 weist ein Außengewinde auf, zur Zusammenwirkung mit einem zugeordneten Innengewinde der im Antriebsgeräteteil 2 vorgesehenen Aufnahme 23.

Die Festteilwandung 22 steht wie bereits ausgeführt innenseitig im Gewindeeingriff mit der Trennlage 19, die in diesem Bereich auch den Hals 17 umgibt.

Das Festteil 21 weist an dem Fortsetzungsteil 24 einen Boden auf, von welchem zentral, von der Achse x mittig durchsetzt, ein metallischer Abschnitt 25, welcher insofern konkret den schon genannten Teil der Hydraulikleitung bildet, ausgeht. Der Abschnitt 25 ragt im Bereich seines freien Endes in den Halses 17 hinein unter radialer Beabstandung der Abschnitt-Außenfläche zu einer Halsinnenfläche. Wie bereits ausgeführt, ist die radiale Beabstandung durch das Auskleidungsteil 26 gefüllt und damit die Isolierung erreicht.

Die Trennlage 19 ist innenseitig, der Achse x folgend, durch das Auskleidungsteil 26 zur Bildung eines Abschnitts der Hydraulikleitung 16 fortgesetzt, wobei entsprechend das Auskleidungsteil 26 auch aus einem elektrisch isolierenden Werkstoff besteht. Das Auskleidungsteil 26 liegt wandungsinnenseitig an dem Hals 17 an und formt zentral einen schon angesprochenen Teil der Hydraulikleitung, die sich in axialer Richtung in den Abschnitt der Hydraulikleitung des festteilseitigen metallischen Abschnitts 25 fortsetzt.

Das Auskleidungsteil 26 weist zugeordnet dem freien Ende des Halses 17 die bereits genannte Radialerweiterung 27 auf. Diese Radialerweiterung 27 unterfängt eine freie Stirnfläche des Halses 17.

Die Trennlage 19 erstreckt sich gemäß der Darstellung in den Figuren 3 und 4 über den im Gewindeeingriff mit dem Festteil 21 stehenden Abschnitt hinaus unter Umgreifen der Radialerweiterung 27.

Die in Richtung auf den Hydraulikzylinder 13 beziehungsweise nach innen gerichteten Flächen des Bodens des Fortsetzungsteils 24 und der Festteilwandung 22 können gemäß der Darstellung in Figur 3 mit einem elektrisch isolierenden Element 28, beispielsweise Kunststoffelement, überdeckt sein.

Die in Figur 3 und Figur 4 zu erkennende Mehrteiligkeit des Festteils 21 kann gegeben sein allein aufgrund einer vereinfachten Herstellbarkeit. Grundsätzlich können diese Teile auch einteilig miteinander verbunden sein.

In allgemeinerer Hinsicht ergibt sich eine die Achse x querende, und im Wesentlichen an einer Isolationsebene E orientierte Isolationslage, welche den Hydraulikzylinder 13 und damit insgesamt den Arbeitskopf 4 gegenüber dem Antriebsgeräteteil 2 vollständig elektrisch isoliert. Bevorzugt verläuft die Isolationslage in einem Querschnitt gesehen U-förmig, wobei, weiter bevorzugt im Bereich des U-Steges, eine Durchsetzung durch die Hydraulikleitung 16 gegeben ist.

Die elektrische Isolierung in den Ausführungsformen der Figuren 1 bis 4 ist insbesondere gegeben durch die Ineinanderschachtelung der elektrisch isolierenden Werkstoffe der Trennlage 19 und des Hydraulikleitung-Teilbereiches 26, in welcher Verschachtelung das freie Ende des Hydraulikzylinders 13 im Bereich dessen Hals 17 im Wesentlichen vollständig aufgenommen ist.

Auch das in der Hydraulikleitung 16, insbesondere im Kanal des elektrisch isolierenden Teilbereiches 26 vorhandene Hydraulikmittel 15 wirkt elektrisch isolierend, so dass auch ein Überschlag beispielsweise vom metallischen Hydraulikzylinder 13 durch den Kanal der Hydraulikleitung 16 auf das metallische Festteil 21 und hierüber auf das Antriebsgeräteteil 2 unterbunden ist.

In der in Figur 7 dargestellten weiteren Ausführungsform ist der Hydraulikzylinder 13 im Wesentlichen in Längserstreckung entlang der Achse x zweigeteilt ausgebildet, bestehend aus einem arbeitskopfseitigen Zylinderteil 29 und einem im Wesentlichen in axialer Verlängerung zu diesem Zylinderteil 29 angeordneten Zylinderteil 30 zusammengesetzt. Der Zylinderteil 30 ist hierbei Teil des Antriebsgeräteteils 2, insbesondere an diesem fest angeordnet. Bevorzugt ist eine Schiebeverlagerung des druckbeaufschlagbaren Kolbenkopfes 36 entlang der Achse x allein im Bereich des Zylinderkopfes 30 gegeben.

Die elektrische Isolierung des Arbeitskopfes 4 gegenüber dem Antriebsgeräteteil 2 erfolgt hier zufolge einer bevorzugten Innenauskleidung des Hydraulikzylinders 13, insbesondere des antriebsgeräteteilseitigen Zylinderteils 30. Es ist entsprechend eine Trennlage 19 vorgesehen, die zunächst und im Wesentlichen die mit der umlaufenden Hydraulikkolbenwandung zusammenwirkende Zylinderinnenfläche umfangsmäßig vollständig überdeckt.

Der Zylinderteil 30 erweitert sich in dem, dem Arbeitskopf 4 zugewandten Ende muffenartig in eine Radialerweiterung 31. Die Trennlage 19 folgt im Querschnitt gemäß Figur 7 dieser stufenartigen Erweiterung und deckt die im Stufenbereich sich ergebende, quer zur Achse x sich erstreckende Stufenwandung, wie auch die sich hiernach anschließende, nach innen gerichtete Erweiterungswandung der Radialerweiterung 31, um sich abschließend stirnseitig der Radialerweiterung 31 mit einem Kragen 32 nach radial außen über die in Richtung auf den Arbeitskopf 4 weisende Ringstirnfläche der Radialerweiterung 31 hinaus zu erstrecken. Der Kragen 32 ist gegenüber dem größten Durchmessermaß der Radialerweiterung 31 durchmesservergrößert.

In dem im Radialerweiterungsbereich des Zylinderteils 30 kreiszylindrisch zu der Achse x verlaufenden Abschnitt 44 der Trennlage 19 ist eine gegenüber den weiteren Überdeckungsbereichen, beispielsweise wandungsinnenseitig der Zylinderfläche, wesentlich größere radiale Dicke vorgesehen. So kann diesbezüglich gegenüber dem mit der Kolbenumfangsfläche zusammenwirkenden Abschnitt der Trennlage 19 eine etwa 5-Fache Dicke vorgesehen sein.

Die so insgesamt etwa topfförmig und bevorzugt einteilig mit dem Kragen 32 geformte Trennlage 19 kann, wie auch dargestellt, im Bereich der Radialerweiterung 31 zufolge eines Gewindeeingriffs an dem Zylinderteil 30 gehaltert sein.

Zugewandt dem Antriebsgeräteteil 2 trägt die sich wandungsinnenseitig des Zylinderteils 30 erstreckende Trennlage 19 einen sich quer zur Achse x in dem Hydraulikzylinder 13 erstreckenden Boden 33, aufweisend eine in Achsrichtung betrachtete Dicke, die einem Mehrfachen, beispielsweise einem 4-bis 6-Fachen der Dicke der Trennlage 19 wandungsinnenseitig des Zylinderteils 30 entsprechen kann.

Der Boden 33 ist zentral von der Achse x durchsetzt mit einer Öffnung 34 versehen, die einen Teil der Hydraulikleitung bildet.

Die dem Hydraulikzylinderboden 35 zugewandte Unterfläche des Bodens 33 kann zu dem Hydraulikzylinderboden 35 in Axialrichtung beabstandet sein, etwa mit dem 0,5- bis 0,75-Fachen des in selber Richtung betrachteten Dickenmaßes des Bodens 33. Auch eine unmittelbare Anlage ist diesbezüglich möglich.

Die dem Hydraulikzylinderboden 35 abgewandte Fläche des Bodens 33 dient als Anschlag für den Hydraulikkolben 12, insbesondere dessen Kolbenkopf 36, womit sich in der in Figur 7 dargestellten Grundstellung, in welcher der Hydraulikkolben 12 maximal in Richtung auf das Antriebsgeräteteil 2 verfahren ist, ein Abstandsmaß a zwischen der zum Antriebsgeräteteil 2 nicht durch eine Trennlage oder dergleichen elektrisch isolierten Unterfläche des Kolbenkopfes 36 im Bereich der Bodenöffnung 34 und dem nächsten elektrisch leitfähigen Bereich des Antriebsgeräteteiles 2 - hier des Hydraulikzylinderbodens 35 - einhält, welches minimale Abstandsmaß a bevorzugt mindestens 10 bis 12 mm, weiter bevorzugt gegebenenfalls etwa 15 mm beträgt. Entsprechend ist ein notwendiges Abstandsmaß zwischen einem elektrisch leitfähigen Bereich des Antriebsgeräteteils 2 und einem gegebenenfalls unter Spannung stehenden Abschnitt des Arbeitskopfes 4 gegeben. Es ergibt sich so eine ausreichende Überschlagfestigkeit.

Zur Anordnung des Arbeitskopfes 4 an dem Antriebsgeräteteil 2 steht das kopfseitige Zylinderteil 29 in Schraubverbindung mit der Trennlage 19 im Bereich dessen Abschnitts 44. Die in Richtung auf das Antriebsgeräteteil 2 weisende Ringstirnfläche des Zylinderteils 29 tritt in Zuordnungsstellung, gegebenenfalls anschlagbegrenzend, gegen den die stufenartige Erweiterung des Zylinderteils 30 auskleidenden Abschnitt 44 der Trennlage 19.

Auch durch den Kragen 32 ist zwischen einem gegebenenfalls spannungsführenden Abschnitt des Arbeitskopfes 4 - in Figur 7 beispielsweise der Gehäuseabschnitt 37 - und dem nächstmöglichen elektrisch leitfähigen Abschnitt des Antriebsgeräteteils 2 - hier die Radialerweiterung 31 - mindestens ein die Überschlagfestigkeit sicherstellendes Abstandsmaß a von 10 bis 12 mm, bevorzugt bis hin zu mindestens 15 mm gegeben.

Gemäß den Darstellungen in den Figuren 4, 8 und 9 kann der Hydraulikkolben 12, insbesondere dessen mit dem Hydraulikmittel 15 zusammenwirkende Kolbenkopf 36, aus einem elektrisch isolierenden Material bestehen, beispielsweise aus Keramik, weiter beispielsweise aus einem druckfesten Kunststoff.

Weiter kann gemäß der Darstellung in Figur 8 auch der Hydraulikzylinder 13, insbesondere die diesbezügliche Zylinderwandung, wie auch weiter bevorzugt der Hydraulikzylinderboden 35 unmittelbar aus einem elektrisch isolierenden Werkstoff bestehen. Hierbei kann, beispielsweise im Bereich der Hydraulikzylinderwandung 38, eine beispielsweise mit Kunststoff umspritzte Metallverstärkung vorgesehen sein. Bei beispielsweise Niederdruck-Systemen kann dagegen auch die Hydraulikzylinderwandung 38 allein aus einem druckfesten Kunststoff, wie beispielsweise GFK oder CFK, gebildet sein.

Der Hydraulikzylinderboden 35 ist mit einer zentralen Bohrung versehen, zur Ausbildung eines Abschnitts der Hydraulikleitung 16. Die in Axialrichtung betrachtete Dicke des Hydraulikzylinderbodens 35 entspricht bevorzugt zumindest dem notwendigen Abstandsmaß a von 10 bis 12, weiter bevorzugt etwa 15 mm, dies weiter insbesondere in solchen Fällen, in welchen der Kolbenkopf 36 aus einem elektrisch leitfähigen, insbesondere metallischen Material gefertigt ist.

Auch bei dieser Ausführungsform ist ein elektrisch isolierender Radialkragen 20 vorgesehen, der in der Ausführungsform mit einem muffenartigen Abschnitt 39 wandungsaußenseitig auf der rohrförmigen Zylinderwandung des ebenfalls aus elektrisch nicht leitfähigem Material bestehenden Hydraulikzylinder 13 aufgesetzt ist. Diesbezüglich kann es sich alternativ aber auch um eine einstückige Ausgestaltung handeln.

Der Radialkragen 20 erstreckt sich in Radialrichtung bevorzugt über das Radialmaß des Arbeitskopfes 4 in einem Bereich innerhalb des notwendigen Abstandes a zu dem Radialkragen 20 hinaus, so dass auch ein Überschlag von dem bevorzugt metallischen Gehäuseabschnitt 37 des Arbeitskopfes 4 auf das metallische Gehäuse des Antriebsgeräteteils 2 unterbunden ist.

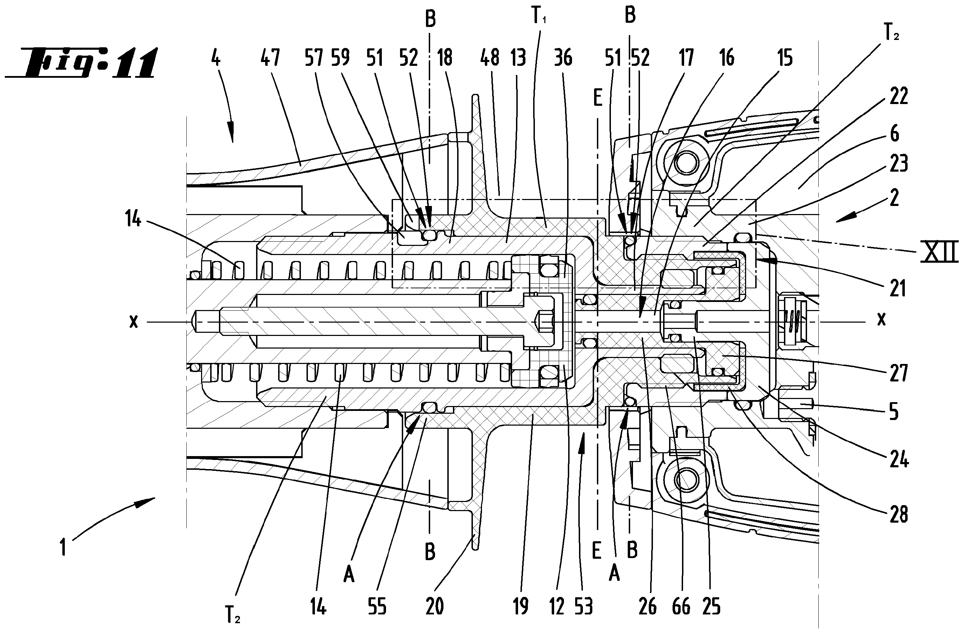

Die Darstellungen in den Figuren 11 bis 17 zeigen in einer weiteren Ausführungsform bei Anordnung einer Trennlage 19 zwischen dem Hydraulikzylinder 13 und dem Antriebsgeräteteil 2 eine Abdichtung 51 sowie ein Entlastungsventil 52 im Fügebereich 53 des Hydraulikzylinders 13. Die sich ergebende Anordnung A dient insbesondere zur Abdichtung eines Zwischenraumes 69 zwischen zwei Teilen T₁ und T₂, hier zwischen der Trennlage 19 (Teil T₁) und der Festteilwandung 22 beziehungsweise dem Hydraulikzylinder 13 (Teil T₂).

Dabei kann, wie auch bevorzugt, die Abdichtung 51 durch ein kreisringförmig durchgehendes Dichtungselement 54, beispielsweise in Form eines O-Ringes, gebildet sein. Dieses Dichtungselement 54 kann darüber hinaus konzentrisch zur Achse x ausgerichtet sein.

Wie weiter insbesondere aus der Darstellung in Figur 11 zu erkennen, können zwei solcher Dichtungselemente 54 in konzentrischer, jedoch in Achsrichtung beabstandeter Lage zueinander vorgesehen sein, wobei ein erstes Dichtungselement 54 zwischen der Trennlage 19 und dem Festteil 21, insbesondere der Festteilwandung 22, positioniert sein kann und das weitere Dichtungselement 54' im Wesentlichen zwischen der Außenwandung des Hydraulikzylinders 13 und der diesen Bereich des Hydraulikzylinders 13 umfassenden Innenwandung der Trennlage 19 vorgesehen sein kann.

Entsprechend können in zwei Bereichen Abdichtungen 51 und Entlastungsventile 52 vorgesehen sein, wobei in einer möglichen, darüber hinaus auch bevorzugten, Ausgestaltung das Dichtungselement 54 beziehungsweise 54' der Abdichtung 51 zugleich auch zur Bildung des Entlastungsventils 52 genutzt sein kann, wobei das Dichtungselement 54 beziehungsweise 54' in einer üblichen Grundstellung unter Vorspannung in ihrem jeweiligen Dichtsitz einliegt. Jedes Dichtungselement 54 und 54' spannt dabei eine quer zur Achse x verlaufende geometrische Ebene B auf.

Die Trennlage 19 kann, wie im Übrigen auch bei den vorbeschriebenen Ausführungsbeispielen teilweise ausgeführt, topfartig das dem Arbeitskopf 2 zugewandte Ende des Hydraulikzylinders 13 umfassen. Außenseitig kann dabei der Radialkragen 20 angeformt sein, wobei die Topfwandung 55 der Trennlage 19 sich über die Ebene des Radialkragens 20 hinaus in Richtung auf den Arbeitskopf 4 erstrecken kann (vergleiche auch Figur 11).

Diesem sich bevorzugt innerhalb des Wandungsabschnittes 47 erstreckenden Topfende der Trennlage 19 ist in dem dargestellten Ausführungsbeispiel das Dichtungselement 54' zugeordnet. Dieses Dichtungselement 54' kann von diesem Abschnitt der Topfwandung 55 der Trennlage 19 bevorzugt über den vollen Umfang umfasst sein, wobei weiter das Dichtungselement 54' in einer konzentrisch zur Achse x umlaufenden Nut 56 der Wandung 18 des Hydraulikzylinders 13 einliegen kann.

Die Nut 56 kann zunächst und im Wesentlichen bezüglich ihres Querschnittes gemäß Figur 11 so gestaltet sein, dass sich das Dichtungselement 54' an dem Nutgrund 56 nach radial innen sowie jeweils nach axial außen an den Nutwandungen abstützen kann. Nach radial außen kann das Dichtungselement 54' gegen die zugewandte Innenfläche der Topfwandung 55 der Trennlage 19 abdichten.

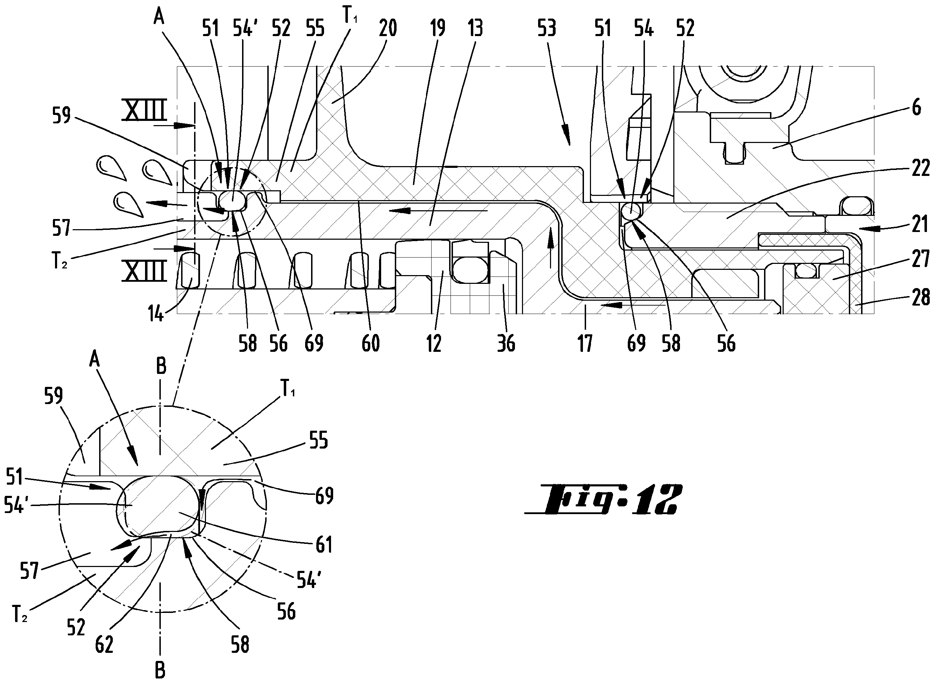

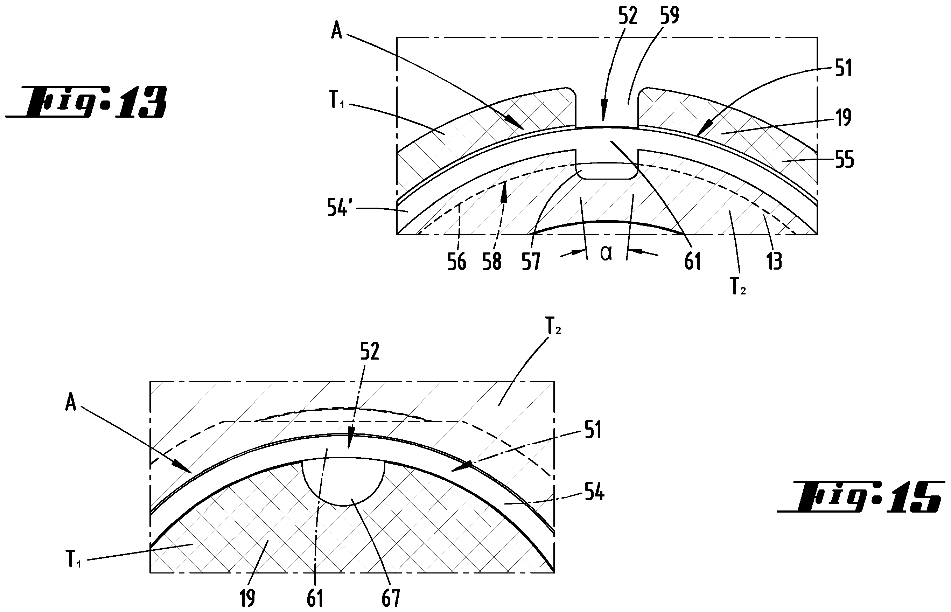

Wie insbesondere aus den vergrößerten Darstellungen in den Figuren 12 und 13 zu erkennen, ergibt sich über den Umfang betrachtet eine in der Wandung des Hydraulikzylinders 18 in Umfangsrichtung begrenzt ausgebildete Aussparung 57, die gegenüber der Nut 56 und den durch die Nut 56 gebildeten Dichtsitz 58 eine größere radiale Tiefe aufweist. Diese Aussparung 57 kann sich - in Axialrichtung betrachtet - anschließend an den Dichtsitz 58 und in diesen einlaufend in Richtung auf den Arbeitskopf 4 erstrecken. Durch Ausbildung dieser Aussparung 57 ist die Anlagefläche für das Dichtungselement 54' auf Seiten des Hydraulikzylinders 13 unterbrochen.

Die Aussparung 57 kann sich, wie beispielsweise aus Figur 13 ersichtlich, in Umfangsrichtung über einen Winkel *a* von beispielsweise 5 bis 20 Grad, weiter beispielsweise 10 bis 15 Grad erstrecken. In diesem Aussparungsbereich liegt die der Hydraulikleitung 16 abgewandte Fläche des Dichtungselementes 54' im Wesentlichen frei, kann entsprechend mit diesem Teilbereich 61 bei einer auf das Dichtungselement 54 einwirkenden Druckbelastung von innen nach außen gegebenenfalls elastisch in den Raum der Aussparung 57 ausweichen (vergleiche auch vergrößerte Darstellung in Figur 12).

In radialer Zuordnung zu der Aussparung 57 kann darüber hinaus auch der freie Endbereich der Topfwandung 55 der Trennlage 19 einen randoffenen Ausschnitt 59 aufweisen (vergleiche auch hier Figur 13).

Bei einem sich gegebenenfalls in dem Gerät aufbauenden zu hohen Hydraulikdruck kann zufolge der vorgeschlagenen Ausgestaltung Hydraulikmittel zwischen der Außenwandung des Hydraulikzylinders 13 und der Innenwandung der topfartigen Trennlage 19 in Richtung auf das axial vordere Ende der Trennlage 19 gelangen. Hierzu kann beispielsweise wandungsaußenseitig des Hydraulikzylinders 13 ein Weg 60, beispielsweise in Form einer nutartigen Vertiefung, vorgegeben sein, welcher Weg 60 zu dem der Aussparung 57 zugeordneten Teilbereich 61 des Dichtungselementes 54' führt. Das in diesem Fall von innen nach außen gegen das Dichtungselement 54' drückende Hydraulikmittel kann im Bereich der Aussparung 57 bei Überschreiten eines vorgegebenen Druckwertes zu einer Bewegung des diesbezüglichen Teilbereiches 61 des Dichtungselementes 54 in Richtung auf die Aussparung 57 und somit im Wesentlichen senkrecht zu der geometrischen Ebene B des Dichtungselements 54' führen, so dass gemäß der vergrößerten Darstellung in Figur 12 ein Austrittsweg 62 vorbei an dem Teilbereich 61 sich einstellen kann. Es kann so über das so gestaltete Entlastungsventil 52 ein inkrementeller Austritt von Hydraulikflüssigkeit erreicht sein.

Mit Abbau des Druckes über das Hydraulikmittel stellt sich das Dichtungselement 54' selbsttätig aufgrund der gegebenen Elastizität und Vorspannung des Dichtungselementes 54' zurück, zum dichtenden Einsitz in den Dichtsitz 58.

Eine Belastung des Dichtungselementes 54' von außen, beispielsweise bei einer Belastung von außen durch Wasser oder dergleichen, wird das Dichtungselement 54 zur Bildung einer Abdichtung 51 in den Dichtsitz 58 gepresst, so dass eine solche Belastung die Wirkung der Abdichtung 51 gegebenenfalls noch unterstützt.

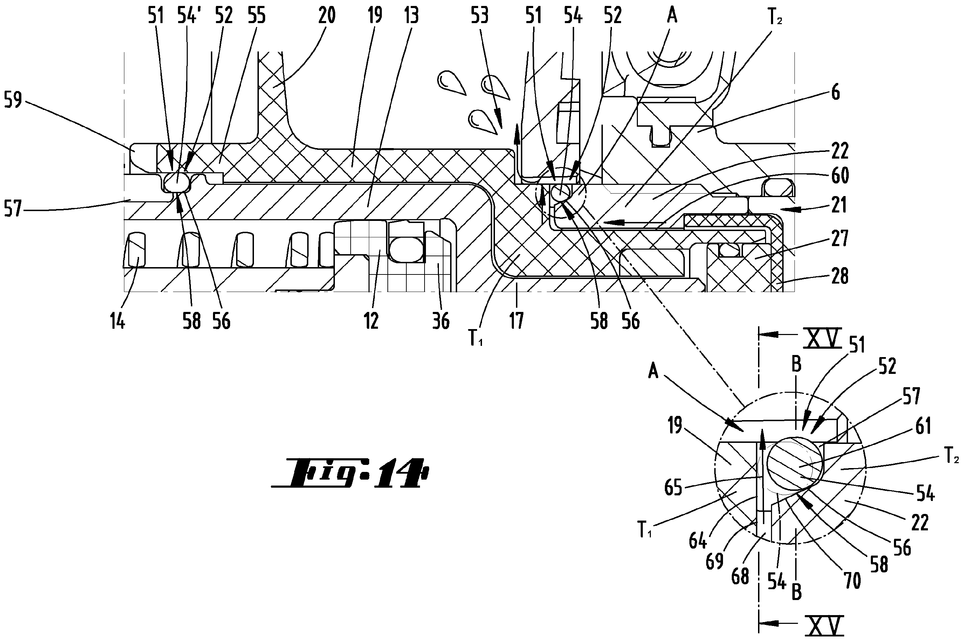

Das weitere Dichtungselement 54 kann gemäß dem dargestellten Ausführungsbeispiel in einem stirnseitig der Festteilwandung 22 ausgebildeten Dichtsitz 58 aufgenommen sein. Dieser Dichtsitz 58 kann in Form einer sowohl axial als auch radial offenen Nut 56 ausgebildet sein, wobei hier der Nutgrund 63 in einem Querschnitt gemäß beispielsweise Figur 14, in welchem Querschnitt sich die Achse x als Linie darstellt, als abfallende Schrägfläche 70 gebildet sein kann.

Das in dem so gestalteten Dichtsitz 58 einliegende Dichtungselement 54 kann im unbelasteten Zustand bevorzugt gegen eine zugewandte Stirnfläche 64 der topfförmigen Trennlage 19 sowie insbesondere gegen den Nutgrund 63 und einer rückwärtigen Nutwandung abdichten.

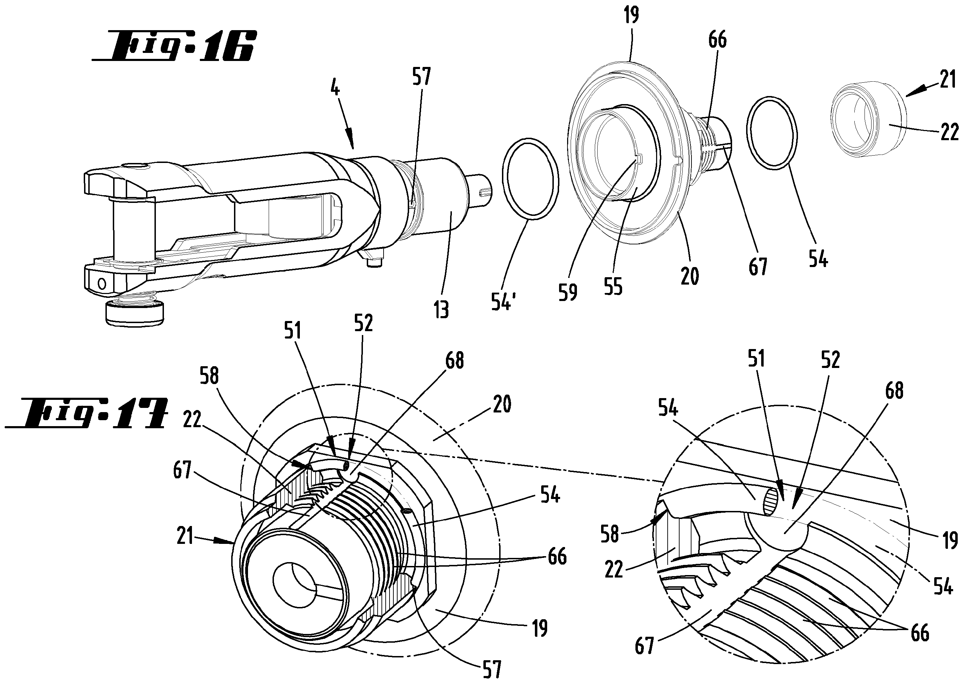

Es kann sich bezüglich eines Hydraulikmittelaustritts bei Überschreiten eines Hydraulikmitteldruckes ein Austrittsweg 65 im Wesentlichen zwischen dem Festteil 21 beziehungsweise der Festteilwandung 22 und der von der Festteilwandung 22 umfassten Wandung der Trennlage 19 ergeben, wobei weiter, wie insbesondere aus Figur 17 ersichtlich, wandungsaußenseitig der Trennlage zur Definition des Austrittsweges 65 eine, ein umlaufendes Gewinde 66 der Trennlage 19 in Achsrichtung unterbrechende Einkerbung 67 vorgesehen sein kann.

Diese Einkerbung 67 kann darüber hinaus endseitig, der Stirnfläche 64 der Trennlage 19 zugeordnet, in eine Radialaussparung 68 übergehen, woraus sich in der Nutzungsstellung ein aussparungsartiger Freiraum für einen Teilbereich 61 des Dichtungselementes 54 ergeben kann (vergleiche insbesondere Figuren 14 und 15). Auch hier kann entsprechend die Anlagefläche an einem der Teile T₁ beziehungsweise T₂, hier die Trennlage 19, in Umfangsrichtung unterbrochen sein.

Bei einer gegebenen Drucküberschreitung des Hydraulikmittels 15 wird auch in diesem Bereich durch Öffnen des Entlastungsventils 52 ein Austritt von Hydraulikmittel 15, insbesondere ein inkrementeller Austritt von Hydraulikmittel 15, von innen nach außen ermöglicht. Dabei kann der Teilbereich 61 des Dichtungselementes 54, unter elastischer Verformung des Teilbereiches 61, vom Dichtsitz gegen die Stirnfläche 64 der Trennlage 19 abgedrückt werden und gegen den ansteigenden Nutgrund 63 entlang der Schrägfläche 70 im Wesentlichen in Axialrichtung, weiter bevorzugt in der Ebene B nach außen und überlagert hierzu senkrecht zur Ebene B, verlagert werden, womit sich der Austrittsweg 65 im Wesentlichen nach radial außen öffnen kann.

Mit Druckabfall kann sich der Teilbereich 61 des Dichtungselements 54 selbsttätig zurück in die Dichtstellung setzen, wobei in dieser Stellung einem Eindringen von beispielsweise Wasser von außen nach innen entgegengewirkt ist. Ein von außen einwirkender Druck auf insbesondere den Teilbereich 61 des Dichtungselements 54 kann aufgrund der Schrägausrichtung des Nutgrundes 63 dichtverstärkend wirken.

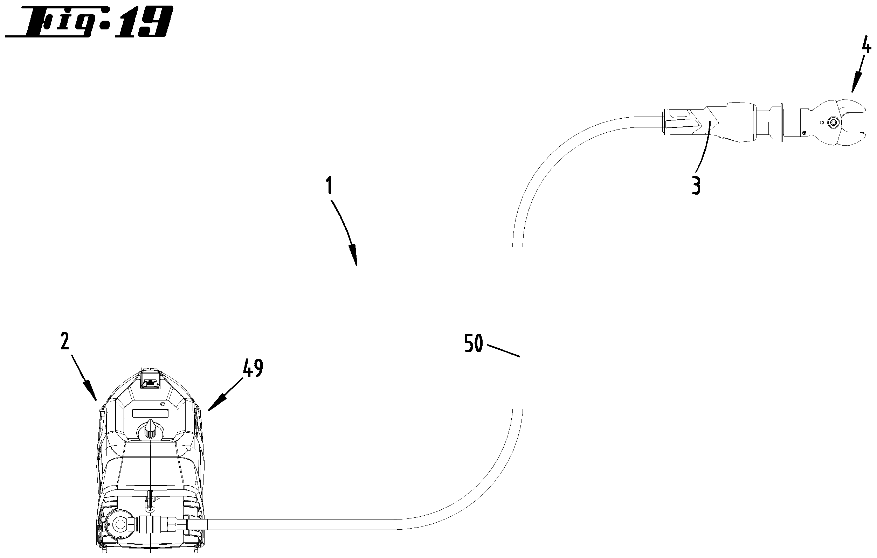

Gemäß dem Ausführungsbeispiel der Darstellung in Figur 19 kann auch ein gesondertes Antriebsaggregat 49 vorgesehen sein, mit welchem bei diesem Ausführungsbeispiel Hydraulikdruck erzeugt und Hydraulikmittel durch einen angeschlossenen Hydraulikschlauch 50 zu dem an dem anderen Ende des Hydraulikschlauches 50 bei dieser Ausführungsform angeschlossenen Arbeitskopf 4 geleitet werden kann. Dieser Arbeitskopf 4 weist, wie auch die zuvor beschriebenen Ausführungsbeispiele, einen Hydraulikkolben 12 und einen Hydraulikzylinder 13 auf. Der Arbeitskopf 4 entspricht insoweit den vorbeschriebenen Arbeitsköpfen, dies weiter insbesondere bezüglich der elektrisch isolierten Ausbildung in der Isolationsebene E. Der Arbeitsablauf ist auch hier in gleicher Weise zutreffend.

Der Hydraulikschlauch 50 bildet zudem, insbesondere zugeordnet dem Arbeitskopf 4, im Wesentlichen die Hydraulikleitung 16 aus. Hierbei kann der Hydraulikschlauch 50 insgesamt eine elektrisch isolierte Ummantelung aufweisen beziehungsweise ist der Schlauchmantel insgesamt elektrisch isolierend ausgebildet.

Der Hydraulikschlauch 50 kann aber auch nur in einem arbeitskopfseitigen Endbereich, zugeordnet dem Anschluss an den Hydraulikzylinder 13 wandungsseitig aus einem elektrisch isolierenden Material bestehen, dies über eine Länge, die eine gegebenenfalls geforderte Überschlagfestigkeit von zumindest 10 kV/cm sicherstellt.

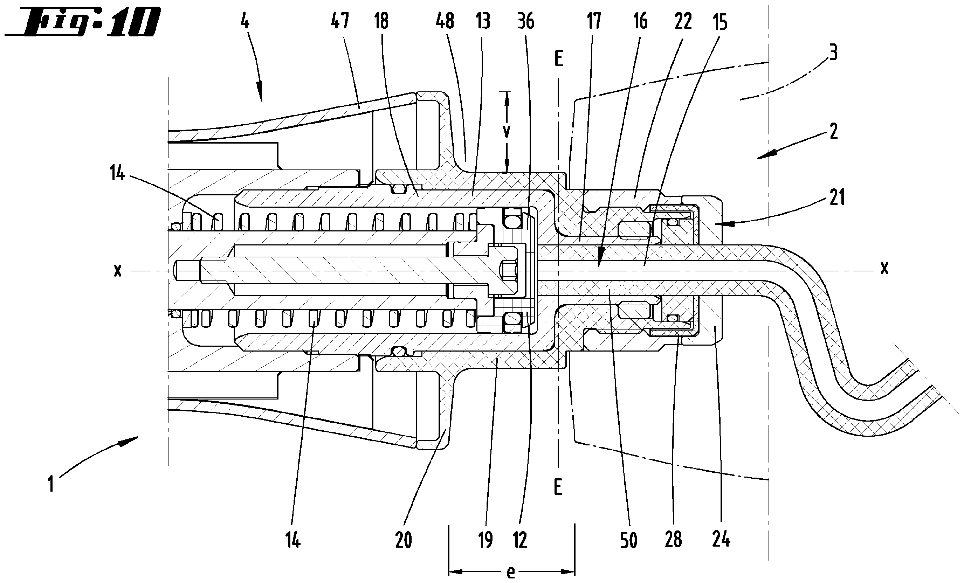

Wie in Figur 10 angedeutet, kann ein solcher Hydraulikschlauch 50 auch Teil eines allein handgeführten, kompakten Arbeitsgerätes 1, beispielsweise gemäß Figur 1, sein, zur Bildung der Hydraulik-Leitung 16 zwischen der Hydraulikmittelpumpe 8 im Griffbereich 3 und dem Hydraulikzylinder 13.

Der Hydraulikschlauch 50 kann unmittelbar an dem arbeitskopfseitigen Hydraulikzylinder 13 angeschlossen sein, wobei das diesbezügliche Ende des Hydraulikschlauches 50 durch die Trennlage 19 entsprechend den Hydraulikleitungsabschnitten der vorbeschriebenen Ausführungsformen hindurchgeführt sein kann. So kann der isolierte Schlauchabschnitt entsprechend dem vorbeschriebenen Hydraulikleitungsabschnitt zur Bildung der Isolationsebene E beitragen (siehe beispielsweise Figur 10).

Auch kann der Hydraulikschlauch 50 an einen in dem Arbeitskopf 4 vorgesehenen und bevorzugt wandungsseitig elektrisch isoliert ausgeführten Hydraulikleitungsabschnitt angeschlossen sein.

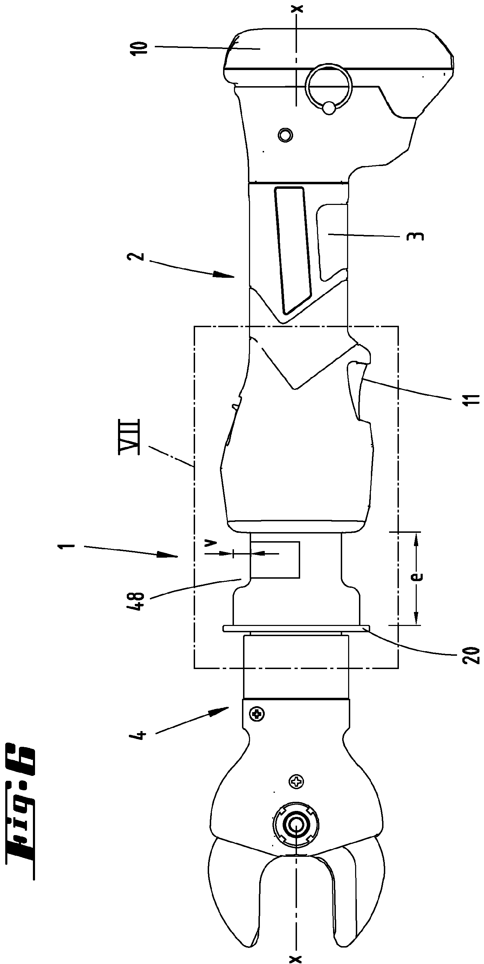

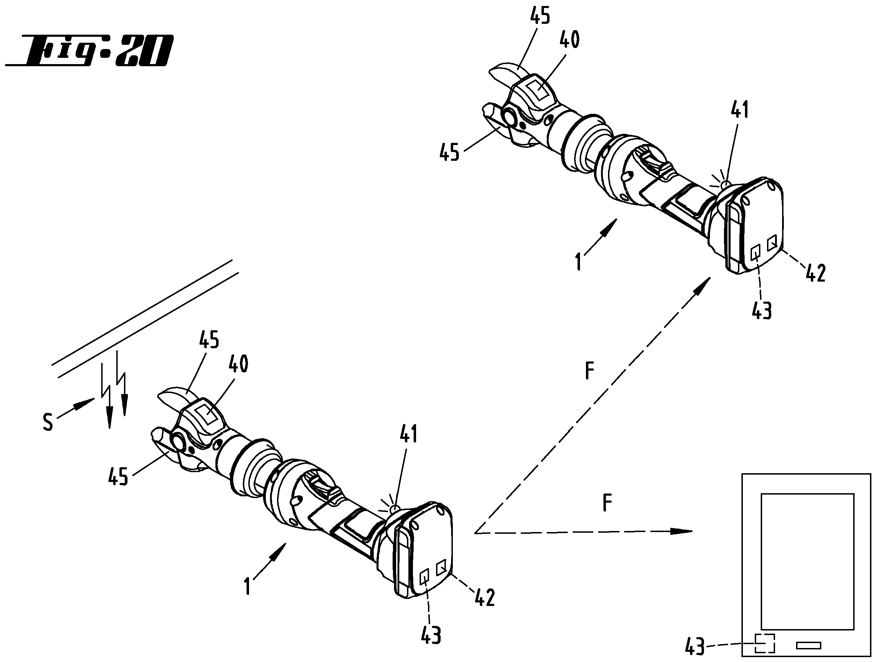

Figur 20 zeigt in schematischer Darstellung ein Arbeitsgerät 1, insbesondere ein Hand-Arbeitsgerät, wie weiter vorzugsweise ein hydraulisch betätigtes Arbeitsgerät, wie dies anhand der Figuren 1 bis 19 beschrieben ist, mit einem Sensor 40 zur Erfassung einer elektrischen Spannung S.

Der Sensor 40 kann im Arbeitsbereich, beispielsweise im Bereich des Arbeitskopfes 4 angeordnet sein, bevorzugt zur kontaktlosen Erfassung einer Spannung, insbesondere Hochspannung in einem Bereich um den Arbeitskopf 4. Hierbei kann eine Erfassung beispielsweise bereits im Abstand von wenigen Zentimetern bis hin zu beispielsweise 50 oder 100 cm, gegebenenfalls auch darüber hinaus, erfolgen.

Das Arbeitsgerät 1 kann mit einem Lichtsignal 41 versehen sein, alternativ oder kombinativ hierzu auch ein Tonsignal, welches Signal dem Nutzer anzeigt, dass im unmittelbaren Arbeitsbereich, insbesondere im Bereich des Arbeitskopfes 4, durch den Sensor 40 eine Spannung S erfasst wurde. Bei einem Arbeitsgerät 1, bei welchem insbesondere der Arbeitskopf 4 gegenüber dem Antriebsgeräteteil 2 beispielsweise gemäß den vorbeschriebenen Ausgestaltungen elektrisch isoliert ist, kann die Arbeit unter Spannung durchgeführt werden. Das Lichtsignal 41 soll in diesem Fall den Benutzer lediglich auf den Ist-Zustand hinweisen.

Bei Hand-Arbeitsgeräten, welche keine elektrische Isolierung, insbesondere keine für den Hochspannungsbereich ausreichende Isolierung, aufweisen, kann das Signal 41 zum Abbruch der durchzuführenden Arbeit führen.

Der geräteseitige Sensor 40 steht in Verbindung mit einem Sender 42. Dieser kann unmittelbar in dem Arbeitsgerät 1 angeordnet sein.

Über den Sender 42 ist eine Funkverbindung F aufbaubar, beispielsweise über Bluetooth oder WLAN, gegebenenfalls über ein Mobilfunknetz.

Die Funkverbindung F ermöglicht dem Arbeitsgerät 1 eine entsprechende Detektierung einer Spannung S an einen Empfänger 43 zu übermitteln. Dieser Empfänger 43 ist außerhalb des Arbeitsgerätes 1 vorgesehen, kann beispielsweise eine zentrale Datenverarbeitungsvorrichtung oder beispielsweise ein Notebook oder dergleichen sein oder auch ein weiteres Arbeitsgerät 1, wie dargestellt. So kann weiter beispielsweise die Erfassung von Spannung S in einem bestimmten Arbeitsbereich als Warnung an weitere Arbeitsgeräte 1 beziehungsweise an die diese weiteren Arbeitsgeräte 1 bedienenden Benutzer weitergeleitet werden.

**Liste der Bezugszeichen**

| | | | |
|---|---|---|---|
| 1 | Arbeitsgerät | 28 | Element |
| 2 | Antriebsgeräteteil | 29 | Zylinderteil |
| 3 | Griffbereich | 30 | Zylinderteil |
| 4 | Arbeitskopf | 31 | Radialerweiterung |
| 5 | Rücklaufventil | 32 | Kragen |
| 6 | Tank | 33 | Boden |
| 7 | Pumpstößel | 34 | Öffnung |
| 8 | Hydraulikmittelpumpe | 35 | Hydraulikzylinderboden |
| 9 | Elektromotor | 36 | Kolbenkopf |
| 10 | Akkumulator | 37 | Gehäuseabschnitt |
| 11 | Betätigungstaste | 38 | Hydraulikzylinderwandung |
| 12 | Hydraulikkolben | 39 | Abschnitt |
| 13 | Hydraulikzylinder | 40 | Sensor |
| 14 | Rückstellfeder | 41 | Lichtsignal |
| 15 | Hydraulikmittel | 42 | Sender |
| 16 | Hydraulikleitung | 43 | Empfänger |
| 17 | Hals | 44 | Abschnitt |
| 18 | Wandung | 45 | Schneidbacke |
| 19 | Trennlage | 46 | Pressbacke |
| 20 | Radialkragen | 47 | Wandungsabschnitt |
| 21 | Festteil | 48 | Verjüngungsbereich |
| 22 | Festteilwandung | 49 | Antriebsaggregat |
| 23 | Aufnahme | 50 | Hydraulikschlauch |
| 24 | Fortsetzungsteil | 51 | Abdichtung |
| 25 | metallischer Abschnitt | 52 | Entlastungsventil |
| 26 | Auskleidungsteil | 53 | Fügebereich |
| 27 | Radialerweiterung | 54 | Dichtungselement |
| 54' | Dichtungselement | a | Abstandsmaß |
| 55 | Topfwandung | e | Erstreckungsmaß |
| 56 | Nut | v | Vorstandsmaß |
| 57 | Aussparung | x | Achse |
| 58 | Dichtsitz | | |
| 59 | Ausschnitt | | |
| 60 | Weg | A | Anordnung |
| 61 | Teilbereich | B | Ebene |
| 62 | Austrittsweg | E | Isolationsebene |
| 63 | Nutgrund | F | Funkverbindung |
| 64 | Stirnfläche | S | Spannung |
| 65 | Austrittsweg | T₁ | Teil |
| 66 | Gewinde | T₂ | Teil |
| 67 | Einkerbung | | |
| 68 | Radialaussparung | | |
| 69 | Zwischenraum | *a* | Winkel |
| 70 | Schrägfläche | | |

## Patentansprüche

1. Hydraulisch betätigtes Arbeitsgerät (1) mit einem Hydraulikzylinder (13), einem in dem Hydraulikzylinder (13) verfahrbaren Hydraulikkolben (12), einem Antriebsgeräteteil (2), das einen Motor (9) und eine Pumpe (8) aufweist, und einer zu dem Hydraulikzylinder (13) führenden Hydraulikleitung (16), wobei das Antriebsgeräteteil (2) einen Griffbereich (3) ausformt, wobei sich an das Arbeitsgeräteteil (2) ein Arbeitskopf (4) des Arbeitsgerätes (1) anschließt,
**dadurch gekennzeichnet, dass** der Griffbereich (3) zu dem Arbeitskopf (4) durch einen aus elektrisch nicht leitfähigem Material bestehenden Radialkragen (20) gesondert ist, der radial über den Griffbereich (3) vorsteht oder durch einen an den Griffbereich (3) arbeitskopfseitig anschließenden, sich axial erstreckenden Verjüngungsbereich (48) zu dem Arbeitskopf (4) gesondert ist, wobei ein radiales Vorstandsmaß (v) und ein axiales Erstreckungsmaß (e) des Verjüngungsbereiches (48) einer Fingerdicke oder mehr entspricht und der Verjüngungsbereich (48) einerends durch das Antriebsgeräteteil und axial anderenends durch einen elektrisch isolierten Radialabschnitt eines Wandungsabschnittes (47) des Arbeitskopfes (4) oder den Radialkragen (20) begrenzt ist.

2. Arbeitsgerät nach Anspruch 1, **dadurch gekennzeichnet, dass** die Hydraulikleitung (16) metallisch ausgebildet ist und eine innere erste Trennlage (19) aus einem elektrisch isolierenden Werkstoff besteht.

3. Arbeitsgerät nach einem der vorhergehenden Ansprüche, **dadurch gekennzeichnet, dass** auch außenseitig der Hydraulikleitung (16) eine zweite Trennlage (19) aus einem elektrisch isolierenden Werkstoff vorgesehen ist, wobei, bevorzugt sich die außenseitig der Hydraulikleitung (16) vorgesehene zweite Trennlage (19) bis in einen Außenbereich des Hydraulikzylinders (13) fortsetzt.

4. Arbeitsgerät nach Anspruch 3, **dadurch gekennzeichnet, dass** die außenseitig der Hydraulikleitung (16) vorgesehene zweite Trennlage (19) und die innere erste Trennlage (19) einteilig ausgebildet sind.

5. Arbeitsgerät nach einem der Ansprüche 3 oder 4, **dadurch gekennzeichnet, dass** die außenseitig der Hydraulikleitung (16) vorgesehene zweite Trennlage (19) und die durch die Hydraulikleitung (16) hindurchgeführte innere erste Trennlage (19) aus demselben Werkstoff bestehen.

6. Arbeitsgerät nach einem der vorhergehenden Ansprüche, **dadurch gekennzeichnet, dass** wandungsinnenseitig des Hydraulikzylinders (13) eine elektrisch isolierende dritte Trennlage (19) vorgesehen ist, wobei, bevorzugt, die wandungsinnenseitig des Hydraulikzylinders (13) vorgesehene dritte Trennlage (19) nach außen über den Außenbereich des Hydraulikzylinders (13) hinaus geführt ist.

7. Arbeitsgerät nach Anspruch 6, **dadurch gekennzeichnet, dass** die dritte Trennlage (19) eine Wandung (18) des Hydraulikzylinders (13) insgesamt ausformt.

8. Arbeitsgerät nach einem der Ansprüche 2 bis 7, **dadurch gekennzeichnet, dass** die Trennlage (19) aus einem elektrisch isolierenden Kunststoff besteht oder aus einem elektrisch isolierenden Keramikwerkstoff besteht.

9. Arbeitsgerät nach einem der vorhergehenden Ansprüche, **dadurch gekennzeichnet, dass** eine Abdichtung (51) hinsichtlich des Eintritts von Fluid durch ein kreisringförmig durchgehendes Dichtungselement (54, 54') gebildet ist, wobei, bevorzugt, ein Entlastungsventil (52) unter Nutzung des Dichtungselementes (54, 54') gebildet ist, wobei, weiter bevorzugt, das Dichtungselement (54, 54') zur Bildung des Entlastungsventils (52) über seinen Umfang einen Teilbereich (61) aufweist, der durch den Hydraulikmitteldruck in eine das Entlastungsventil (52) öffnende Stellung bewegbar ist.

10. Arbeitsgerät nach Anspruch 9, **dadurch gekennzeichnet, dass** die Bewegbarkeit des Teilbereiches (61) durch eine Aussparung (57) in einem das Dichtungselement (54, 54') aufnehmenden Dichtungssitz (58) des Hydraulikzylinders (13) oder einem mit dem Hydraulikzylinders (13) im Fügebereich (53) zusammenwirkenden Abschnitt des Antriebsgeräteteils (2) gegeben ist.

11. Arbeitsgerät nach Anspruch 9 oder 10, **dadurch gekennzeichnet, dass** die Abdichtung (51) zwischen einem elektrisch leitfähigen Gehäuseabschnitt des Arbeitsgeräteteiles (2) oder des Hydraulikzylinders (13) und der elektrisch isolierenden Trennlage (19) gegeben ist.

12. Arbeitsgerät nach einem der Ansprüche 9 bis 11, **dadurch gekennzeichnet, dass** zwei Abdichtungen (51) gegen Eintritt von Fluid von außen und/ oder zur Ausbildung von Entlastungsventilen (52) vorgesehen sind.

13. Arbeitsgerät nach einem der vorhergehenden Ansprüche, **dadurch gekennzeichnet, dass** der Hydraulikzylinder (13) in Bezug auf das Antriebsgeräteteil (2) elektrisch isoliert ausgebildet ist, , dass die als Hydraulikschlauch (50) ausgebildete Hydraulikleitung (16) jedenfalls über einen wesentlichen Teil ihrer Länge aus einem elektrisch isolierenden Werkstoff besteht, dass der Hydraulikschlauch (50) sich zwischen der Hydraulikmittelpumpe (8) und dem Hydraulikzylinder (13) in einem Griffbereich (3) des Arbeitsgerätes (1) erstreckt und dass die als Hydraulikschlauch (50) ausgebildete Hydraulikleitung (16) fester Bestandteil des Griffbereiches ist als Teil eines handgeführten Arbeitsgerätes (1) insgesamt, wobei das Arbeitsgerät (1) weiter einen Akkumulator (10), einen Hydraulikmittel-Vorratsbehälter zusammengefasst mit dem elektrischen Motor (9), der Pumpe (8), der Hydraulikleitung (16) und dem Hydraulikzylinder (13) aufgenommen sind in einem starren Gehäuse, das zugleich auch den Griffbereich (3) für die Handbedienung bildet.

14. Arbeitsgerät nach einem der vorhergehenden Ansprüche, **dadurch gekennzeichnet, dass** das Arbeitsgerät zur Abgabe eines Licht- (41) oder Tonsignals ausgebildet ist, welches dem Nutzer anzeigt, dass im unmittelbaren Arbeitsbereich, insbesondere im Bereich des Arbeitskopfes (4), durch einen Sensor (40) eine Spannung (S) erfasst wurde.

15. Arbeitsgerät nach Anspruch 14, **dadurch gekennzeichnet, dass** der Sensor (40) mit einem in dem Arbeitsgerät (1) angeordneten Sender (42) in Verbindung steht und/ oder dass über den Sender (42) eine Funkverbindung (F) aufbaubar ist, beispielsweise über Bluetooth, WLAN, WPAN oder ein Mobilfunknetz, wobei, bevorzugt, die Erfassung der Spannung (S) in einem bestimmten Arbeitsbereich als Warnung an weitere Arbeitsgeräte (1) bzw. an die diese weiteren Arbeitsgeräte (1) bedienenden Benutzer weiterleitbar ist.

## Claims

1. Hydraulically actuated working device (1) having a hydraulic cylinder (13), a hydraulic piston (12) which can be moved in the hydraulic cylinder (13), a drive device part (2) which has a motor (9) and a pump (8), and a hydraulic line (16) leading to the hydraulic cylinder (13), wherein the drive device part (2) forms a handle region (3), wherein a working head (4) of the working device (1) adjoins the working device part (2), **characterised in that** the handle region (3) is separated from the working head (4) by a radial collar (20) consisting of electrically non-conductive material, which projects radially beyond the handle region (3) or is separated from the working head (4) by an axially extending tapered region (48) adjoining the handle region (3) on the working head side, wherein a radial projection protrusion (v) and an axial level of extension (e) of the tapered region (48) correspond to a finger thickness or more and the tapering region (48) is bounded at one end by the drive device part and axially at the other end by an electrically insulated radial portion of a wall section (47) of the working head (4) or the radial collar (20).

2. The working device according to claim 1, **characterised in that** the hydraulic line (16) is metallic and an inner first separating layer (19) consists of an electrically insulating material.

3. The working device according to one of the preceding claims, **characterised in that** a second separating layer (19) made of an electrically insulating material is also provided on the outside of the hydraulic line (16), the second separating layer (19) provided on the outside of the hydraulic line (16) preferably continuing into an outer region of the hydraulic cylinder (13).

4. The working device according to claim 3, **characterised in that** the second separating layer (19) provided on the outside of the hydraulic line (16) and the inner first separating layer (19) are formed in one piece.

5. The working device according to one of claims 3 or 4, **characterised in that** the second separating layer (19) provided on the outside of the hydraulic line (16) and the inner first separating layer (19) passing through the hydraulic line (16) consist of the same material.

6. The working device according to one of the preceding claims, **characterised in that** an electrically insulating third separating layer (19) is provided on the inside wall of the hydraulic cylinder (13), wherein, preferably, the third separating layer (19) provided on the inside wall of the hydraulic cylinder (13) is guided outwards beyond the outer region of the hydraulic cylinder (13).

7. The working device according to claim 6, **characterised in that** the third separating layer (19) forms a wall (18) of the hydraulic cylinder (13) as a whole.

8. The working device according to one of claims 2 to 7, **characterised in that** the separating layer (19) consists of an electrically insulating plastic or consists of an electrically insulating ceramic material.

9. The working device according to one of the preceding claims, **characterised in that** a seal (51) with respect to the entry of fluid is formed by an annularly continuous sealing element (54, 54'), wherein, preferably, a relief valve (52) is formed using the sealing element (54, 54'), wherein, further preferably, the sealing element (54, 54') for forming the relief valve (52) has a partial region (61) over its circumference which can be moved by the hydraulic medium pressure into a position opening the relief valve (52).

10. The working device according to claim 9, **characterised in that** the movability of the partial region (61) is provided by a recess (57) in a sealing seat (58) of the hydraulic cylinder (13) receiving the sealing element (54, 54') or a section of the drive working device part (2) cooperating with the hydraulic cylinder (13) in the joining region (53).

11. The working device according to claim 9 or 10, **characterised in that** the seal (51) is provided between an electrically conductive housing section of the working device part (2) or the hydraulic cylinder (13) and the electrically insulating separating layer (19).

12. The working device according to one of claims 9 to 11, **characterised in that** two seals (51) are provided to prevent fluid from entering from outside and/or to form relief valves (52).

13. The working device according to one of the preceding claims, **characterised in that** the hydraulic cylinder (13) is designed to be electrically insulated in relation to the drive device part (2), **in that** the hydraulic line (16) designed as a hydraulic hose (50) consists of an electrically insulating material, at least over a substantial part of its length, **in that** the hydraulic hose (50) extends between the hydraulic medium pump (8) and the hydraulic cylinder (13) in a handle region (3) of the working device (1), and **in that** the hydraulic line (16) in the form of a hydraulic hose (50) is an integral part of the grip region as part of a hand-guided working device (1) as a whole, wherein the working device (1) further comprises an accumulator (10), a hydraulic fluid reservoir combined with the electric motor (9), the pump (8), the hydraulic line (16) and the hydraulic cylinder (13) are accommodated in a rigid housing, which also forms the handle region (3) for manual operation.

14. The working device according to one of the preceding claims, **characterised in that** the working device is designed to emit a light (41) or sound signal which indicates to the user that a voltage (S) has been detected by a sensor (40) in the immediate working area, in particular in the area of the working head (4).

15. The working device according to claim 14, **characterised in that** the sensor (40) is connected to a transmitter (42) arranged in the working device (1) and/or **in that** a radio connection (F) can be established via the transmitter (42), for example via Bluetooth, WLAN, WPAN or a mobile radio network, wherein, preferably, the detection of the voltage (S) in a specific working range can be forwarded as a warning to further working devices (1) or to the users operating these further working devices (1).

## Revendications

1. Outil de travail (1) à commande hydraulique comprenant un cylindre hydraulique (13), un piston hydraulique (12) mobile dans le cylindre hydraulique (13), une partie d'outil d'entraînement (2) qui présente un moteur (9) et une pompe (8), et une conduite hydraulique (16) menant au cylindre hydraulique (13), la partie d'appareil d'entraînement (2) formant une zone de préhension (3), une tête de travail (4) de l'appareil de travail (1) se raccordant à la partie d'appareil de travail (2), **caractérisé en ce que** la zone de préhension (3) est séparée de la tête de travail (4) par un collet radial (20) constitué d'un matériau non conducteur de l'électricité, qui dépasse radialement de la zone de préhension (3) ou qui est séparé de la tête de travail (4) par une zone de rétrécissement (48) s'étendant axialement et se raccordant à la zone de préhension (3) du côté de la tête de travail, une dimension radiale (v) et une dimension axiale (e) de la zone de rétrécissement (48) correspondant à une épaisseur de doigt ou plus et la zone de rétrécissement (48) étant limitée à une extrémité par la partie de l'appareil d'entraînement et à l'autre extrémité par une section radiale isolée électriquement d'une section de paroi (47) de la tête de travail (4) ou par le collet radial (20).

2. Outil de travail selon la revendication 1, **caractérisé en ce que** la conduite hydraulique (16) est métallique et qu'une première couche de séparation (19) intérieure est constituée d'un matériau électriquement isolant.

3. Outil de travail selon l'une des revendications précédentes, **caractérisé en ce qu'**une deuxième couche de séparation (19) en un matériau électriquement isolant est également prévue à l'extérieur de la conduite hydraulique (16), la deuxième couche de séparation (19) prévue à l'extérieur de la conduite hydraulique (16) se prolongeant de préférence jusque dans une zone extérieure du cylindre hydraulique (13).

4. Outil de travail selon la revendication 3, **caractérisé en ce que** la deuxième couche de séparation (19) prévue sur le côté extérieur de la conduite hydraulique (16) et la première couche de séparation (19) intérieure sont formées d'une seule pièce.

5. Outil de travail selon l'une des revendications 3 ou 4, **caractérisé en ce que** la deuxième couche de séparation (19) prévue sur le côté extérieur de la conduite hydraulique (16) et la première couche de séparation (19) intérieure traversant la conduite hydraulique (16) sont constituées du même matériau.

6. Outil de travail selon l'une des revendications précédentes, **caractérisé en ce qu'**une troisième couche de séparation (19) électriquement isolante est prévue sur le côté intérieur de la paroi du cylindre hydraulique (13), la troisième couche de séparation (19) prévue sur le côté intérieur de la paroi du cylindre hydraulique (13) étant de préférence guidée vers l'extérieur au-delà de la zone extérieure du cylindre hydraulique (13).

7. Outil de travail selon la revendication 6, **caractérisé en ce que** la troisième couche de séparation (19) forme une paroi (18) du cylindre hydraulique (13) dans son ensemble.

8. Outil de travail selon l'une des revendications 2 à 7, **caractérisé en ce que** la couche de séparation (19) est constituée d'une matière plastique électriquement isolante ou est constituée d'un matériau céramique électriquement isolant.

9. Outil de travail selon l'une des revendications précédentes, **caractérisé en ce qu'**une étanchéité (51) est formée, en ce qui concerne l'entrée de fluide, par un élément d'étanchéité (54, 54') continu en forme d'anneau circulaire, une soupape de décharge (52) étant, de préférence, formée en utilisant l'élément d'étanchéité (54, 54'), l'élément d'étanchéité (54, 54') présentant, de préférence encore, pour former la soupape de décharge (52), une zone partielle (61) sur sa périphérie, qui peut être déplacée par la pression du fluide hydraulique dans une position ouvrant la soupape de décharge (52).

10. Outil de travail selon la revendication 9, **caractérisé en ce que** la mobilité de la zone partielle (61) est donnée par un évidement (57) dans un siège d'étanchéité (58) du cylindre hydraulique (13) recevant l'élément d'étanchéité (54, 54') ou par une section de la partie de l'outil d'entraînement (2) coopérant avec le cylindre hydraulique (13) dans la zone d'assemblage (53).

11. Outil de travail selon la revendication 9 ou 10, **caractérisé en ce que** l'étanchéité (51) est assurée entre une section de boîtier électriquement conductrice de la partie d'outil de travail (2) ou du cylindre hydraulique (13) et la couche de séparation électriquement isolante (19).

12. Outil de travail selon l'une des revendications 9 à 11, **caractérisé en ce que** deux joints d'étanchéité (51) sont prévus pour empêcher l'entrée de fluide de l'extérieur et/ou pour former des soupapes de décharge (52).

13. Appareil de travail selon l'une des revendications précédentes, **caractérisé en ce que** le cylindre hydraulique (13) est réalisé de manière à être isolé électriquement par rapport à la partie d'appareil d'entraînement (2), **en ce que** la conduite hydraulique (16) réalisée sous forme de tuyau hydraulique (50) est constituée, en tout cas sur une partie essentielle de sa longueur, d'un matériau isolant électriquement, **en ce que** le tuyau hydraulique (50) s'étend entre la pompe à fluide hydraulique (8) et le cylindre hydraulique (13) dans une zone de préhension (3) de l'outil de travail (1) et **en ce que** la conduite hydraulique (16) réalisée sous forme de tuyau hydraulique (50) fait partie intégrante de la zone de préhension en tant que partie d'un outil de travail (1) guidé manuellement dans son ensemble, l'outil de travail (1) comprenant en outre un accumulateur (10), un réservoir de fluide hydraulique, le moteur électrique (9), la pompe (8), la conduite hydraulique (16) et le cylindre hydraulique (13) étant logés dans un boîtier rigide qui forme également la zone de préhension (3) pour la commande manuelle.

14. Outil de travail selon l'une des revendications précédentes, **caractérisé en ce que** l'outil de travail est conçu pour émettre un signal lumineux (41) ou sonore qui indique à l'utilisateur qu'une tension (S) a été détectée par un capteur (40) dans la zone de travail immédiate, notamment dans la zone de la tête de travail (4).

15. Appareil de travail selon la revendication 14, **caractérisé en ce que** le capteur (40) est en liaison avec un émetteur (42) disposé dans l'appareil de travail (1) et/ou **en ce qu'**une liaison radio (F) peut être établie par l'intermédiaire de l'émetteur (42), par exemple par Bluetooth, WLAN, WPAN ou un réseau de téléphonie mobile, sachant que, de préférence, la détection de la tension (S) dans une zone de travail déterminée peut être transmise en tant qu'avertissement à d'autres appareils de travail (1) ou aux utilisateurs se servant de ces autres appareils de travail (1).
